# EUROPEAN PATENT SPECIFICATION

(11) **EP 3 189 758 B1**
(45) Date of publication and mention of the grant of the patent: **12.02.2020**
(21) Application number: 15838500.5
(22) Date of filing: 24.08.2015
(51) Int. Cl.: A47L 9/16, A47L 9/28, G01N 21/17, G01G 19/00, A47L 9/10, A47L 9/19

(54) **DUST COLLECTING DEVICE, CLEANING DEVICE USING SAID DUST COLLECTING DEVICE, AND METHOD OF CONTROLLING CLEANING DEVICE**
STAUBSAMMLUNGSVORRICHTUNG, REINIGUNGSVORRICHTUNG MIT VERWENDUNG DER BESAGTEN STAUBSAMMLUNGSVORRICHTUNG UND VERFAHREN ZUR STEUERUNG DER REINIGUNGSVORRICHTUNG
DISPOSITIF DE COLLECTE DE POUSSIÈRE, APPAREIL DE NETTOYAGE UTILISANT LEDIT DISPOSITIF DE COLLECTE DE POUSSIÈRE ET PROCÉDÉ DE COMMANDE DUDIT APPAREIL DE NETTOYAGE

(30) Priority: 03.09.2014 KR 20140116898
(43) Date of publication of application: 12.07.2017
(73) Proprietor: Samsung Electronics Co., Ltd., Gyeonggi-do 16677 (KR)
(72) Inventor: CHUNG, Jun Sung, Seongnam-si Gyeonggi-do 13554 (KR); KIM, Joo Ho, Suwon-si Gyeonggi-do 16704 (KR); ROH, Hee Yuel, Suwon-si Gyeonggi-do 16510 (KR)
(74) Representative: Gulde & Partner
(86) International application number: PCT/KR2015/008823
(87) International publication number: WO 2016/036042

(56) References cited:
- EP-A2- 2 612 583
- DE-A1-102012 100 041
- JP-A- H04 332 519
- JP-A- 2007 167 154
- JP-A- 2010 125 102
- JP-A- 2012 183 213
- JP-A- 2012 183 213
- KR-A- 20050 037 735
- US-A1- 2013 329 166

## Description

### [Technical Field]

The disclosed embodiments relate to a dust collecting apparatus, a cleaning apparatus using the dust collecting apparatus, and a method of controlling the cleaning apparatus.

### [Background Art]

A cleaner is an apparatus configured to make cleaning by inhaling small impurities, for example, dust with air using a suction force, separating the inhaled small impurities in the air from the air and collecting the separated small impurities. A cleaner may make cleaning by acquiring a suction force by rotating fans using a motor and inhaling a fluid and dust together using the suction force.

Cleaners may be divided into various categories such as an upright-type cleaner and a canister-type cleaner. The upright-type cleaner has a structure in which a dust collecting bin is coupled to a suction hole configured to inhale impurities, and the canister-type cleaner has a structure in which a suction part provided with a suction hole configured to inhale impurities and a main body provided with a dust collecting bin are separated from each other and the main body may be coupled to the suction part via a hose.

Also, a robot cleaner configured to inhale impurities on the floor while automatically moving in response to sensors and a control system has been commonly used recently. The robot cleaner has an advantage in that it can clean a cleaning area while automatically running the cleaning area even when a user does not directly grip and manipulate it. The robot cleaner may automatically make cleaning while changing its direction by determining distances to various obstacles installed in the cleaning area by means of a distance sensor and driving left and right wheels in response to the results of determination.

JP2012183213 A discloses a dust collecting apparatus according to the preamble of claim 1.

### [Disclosure]

### [Technical Problem]

Therefore, it is an aspect of the disclosed embodiments to provide a dust collecting apparatus capable of easily checking a level of impurities collected inside the dust collecting apparatus or a cumulative amount of impurities inside the dust collecting apparatus according to a user's need, a cleaning apparatus using the dust collecting apparatus, and a method of controlling the cleaning apparatus.

It is another aspect of the disclosed embodiments to provide a dust collecting apparatus capable of easily checking various types of information associated with a cleaner, such as driving of the cleaner, a need to clean up, an operation mode of the cleaner, an impurity intake rate, or a need to exchange the dust collecting apparatus, etc., a cleaning apparatus using the dust collecting apparatus, and a method of controlling the cleaning apparatus.

### [Technical Solution]

To achieve the aspects mentioned above, a cleaning apparatus using the dust collecting apparatus and a method of controlling the cleaning apparatus are provided as defined in the claims.

The dust collecting apparatus may comprises a dust collecting space configured to collect impurities and a variable body formed to surround the dust collecting space, wherein at least one of transparency, displayed shape and color of the variable body is changed by selectively transmitting or reflecting light in response to applied electric power.

The dust collecting apparatus may further comprises a controller configured to control the electric power applied to the variable body.

The controller may control the electric power applied to the variable body in response to at least one of an amount of impurities accumulated in the dust collecting space, whether or not the impurities are inhaled into the dust collecting space, a velocity of the impurities inhaled into the dust collecting space, and an amount of the impurities inhaled into the dust collecting space.

The variable body comprises a plurality of layers capable of reflecting light with different colors in response to the applied electric power, and, when the impurities are inhaled into the dust collecting apparatus, the controller controls the electric power to be applied to all the plurality of layers so that light passes through all the plurality of layers.

The variable body may comprise a variable panel configured to transmit or reflect light in response to the applied electric power.

The variable panel may comprise a plurality of layers capable of reflecting light with different colors in response to the applied electric power.

The variable body has one of the transparency, displayed shape and color changed by applying electric power to at least one of the plurality of layers.

The dust collecting apparatus may further comprise a variable assembly in which the variable body is installed to be exposed in inner and outer directions.

The variable assembly may comprise a first assembly having at least one open surface, and a second assembly having one open surface corresponding to one open surface of the first assembly and detachable/attachable from/to the first assembly.

The variable body is installed in at least one of the first assembly and the second assembly.

The dust collecting apparatus further comprise a connector configured to electrically connect the first assembly and the second assembly and a controller configured to control electric power applied to the variable body installed in at least one of the first assembly and the second assembly.

The dust collecting apparatus may further comprise a sensor comprising a weight sensing sensor configured to sense an amount of impurities in the dust collecting space.

The dust collecting apparatus may further comprise an internal dust collector having the dust collecting space formed at an inner side thereof and having an outer surface exhibiting light transmissivity.

The dust collecting apparatus may further comprise a variable assembly in which the variable body is installed to be exposed in inner and outer directions and which is connected so that the internal dust collector is detachable/attachable from/to an inner side thereof.

The dust collecting apparatus may further comprise a fastener configured to fasten the internal dust collector and the variable assembly to each other.

The cleaning apparatus comprises a dust collector comprising a dust collecting space configured to collect impurities and one or two or more variable body formed to surround the dust collecting space and having at least one of transparency, displayed shape and color changed in response to applied electric power and a controller configured to control electric power applied to the dust collector in response to a state of the cleaning apparatus.

A method of controlling a cleaning apparatus which comprises a dust collecting space configured to collect impurities and one or two or more variable body formed to surround the dust collecting space, the method may comprise determining a state of the cleaning apparatus, applying electric power to the variable body in response to the state of the cleaning apparatus and changing at least one of transparency, displayed shape and color of the variable body in response to the applied electric power.

The state of the cleaning apparatus may comprise at least one of an amount of impurities accumulated inside the dust collecting space, whether or not the cleaning apparatus operates, an impurity intake rate of the cleaning apparatus, an amount of the inhaled impurities in the cleaning apparatus, and the last cleaning time.

The variable body may comprise a variable panel comprising a plurality of layers capable of reflecting light with different colors.

The applying of the electric power to the variable body in response to the state of the cleaning apparatus may comprise determining whether the transparency or color is changed in response to the state of the cleaning apparatus and applying electric power to at least one of the plurality of layers, depending on whether the transparency or color is changed.

### [Advantageous Effects]

According to the dust collecting apparatus, the cleaning apparatus using the dust collecting apparatus and the method of controlling the cleaning apparatus as described above, a user can easily check a level of impurities collected inside the dust collecting apparatus and a cumulative amount of impurities inside the dust collecting apparatus, when necessary.

According to the dust collecting apparatus, the cleaning apparatus using the dust collecting apparatus and the method of controlling the cleaning apparatus as described above, a user can easily determine when the dust collecting apparatus of a cleaner should be emptied since the user can easily check an amount of impurities accumulated in the dust collecting apparatus of the cleaner at any time with the naked eye.

According to the dust collecting apparatus, the cleaning apparatus using the dust collecting apparatus and the method of controlling the cleaning apparatus as described above, an effect of improving the aesthetic appearance of the cleaner can be achieved since the impurities inside the dust collecting apparatus are not seen in certain situations such as a situation in which a user does not use the cleaner.

According to the dust collecting apparatus, the cleaning apparatus using the dust collecting apparatus and the method of controlling the cleaning apparatus as described above, a user can easily check various types of information associated with the cleaner, such as driving of the cleaner, an operation mode of the cleaner, an impurity intake rate, a need to clean up, or a need to exchange the dust collecting apparatus, etc. Accordingly, the user's convenience to use the cleaner can be improved.

### [Description of Drawings]

FIG. 1 is a block diagram showing one exemplary embodiment of a cleaner.
FIG. 2 is a cross-sectional view for explaining one exemplary embodiment of a variable body.
FIG. 3 is a diagram for explaining that a cholesteric liquid crystal display panel reflects incident light as one example of the variable body forming an outer wall of the dust collecting apparatus.
FIG. 4 is a diagram showing the cholesteric liquid crystal display panel transmitting incident light.
FIG. 5 is a diagram showing the cholesteric liquid crystal display panel completely transmitting incident light.
FIG. 6 is a diagram showing one exemplary embodiment of the cholesteric liquid crystal display panel.
FIG. 7 is a diagram showing a cholesteric liquid crystal display panel that reflects red light.
FIG. 8 is a diagram showing a cholesteric liquid crystal display panel that reflects blue light.
FIG. 9 is a diagram showing a cholesteric liquid crystal display panel that reflects green light.
FIG. 10 is a perspective view showing an appearance of a canister-type cleaner according to one exemplary embodiment.
FIG. 11 is a diagram showing a dust collecting apparatus which can be coupled to the canister-type cleaner according to one exemplary embodiment.
FIG. 12 is an exploded perspective view of the dust collecting apparatus according to one exemplary embodiment.
FIG. 13 is a diagram showing an assembly coupling apparatus provided at the first assembly of the dust collecting apparatus.
FIG. 14 is a diagram showing one case in which the first assembly and the second assembly are detached from each other.
FIG. 15 is a diagram showing an assembly coupling apparatus provided in the second assembly of the dust collecting apparatus.
FIG. 16 is a diagram showing one case in which the transparency or color of the variable body in the first assembly is changed.
FIG. 17 is a diagram showing one exemplary embodiment in which the variable body is provided at the second assembly.
FIG. 18 is a diagram showing one case in which the transparency or color of the second assembly is changed.
FIG. 19 is a diagram showing one exemplary embodiment in which variable body are provided at both the first and second assemblies.
FIG. 20 is an exploded perspective view showing another exemplary embodiment of the dust collecting apparatus.
FIG. 21 is a cross-sectional view for explaining the another exemplary embodiment of the dust collecting apparatus.
FIG. 22 is a diagram showing one case in which the transparency of the variable body of the dust collecting apparatus is changed, depending on whether or not the cleaner operates.
FIG. 23 is a diagram showing one case in which a color of the variable body of the dust collecting apparatus is changed depending on whether or not the cleaner operates.
FIG. 24 is a diagram for explaining one case in which the transparency of the variable body of the dust collecting apparatus is changed depending on an operation speed of the cleaner.
FIG. 25 is a diagram for explaining one case in which a color of the variable body of the dust collecting apparatus is changed depending on a need to clean up.
FIG. 26 is a diagram for explaining one case in which a user is informed of whether or not it is necessary to clean up during an operation of the cleaner using the variable body installed at both of the first assembly and the second assembly.
FIG. 27 is a perspective view showing an appearance of the upright-type cleaner according to one exemplary embodiment.
FIG. 28 is a diagram showing one case in which the transparency of the variable body of the dust collecting apparatus is changed depending on whether or not the upright-type cleaner operates.
FIG. 29 is a perspective view showing one exemplary embodiment of a robot cleaner.
FIG. 30 is an exploded plan view showing one exemplary embodiment of the robot cleaner.
FIG. 31 is a diagram showing one case in which the transparency of the variable body of the dust collecting apparatus is changed depending on whether or not the robot cleaner operates.
FIG. 32 is a flowchart illustrating one exemplary embodiment of the method of controlling a cleaner.
FIG. 33 is a flowchart illustrating one detailed embodiment of the method of controlling a cleaner.
FIG. 34 is a flowchart illustrating another exemplary embodiment of the method of controlling a cleaner.

### [Best Mode]

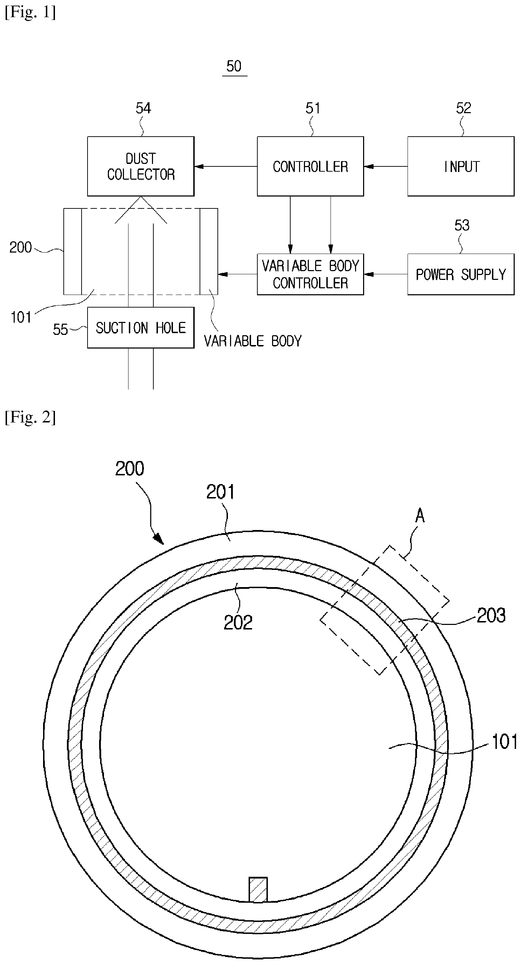

Hereinafter, a configuration of a cleaner will be described with reference to FIG. 1.

FIG. 1 is a block diagram showing one exemplary embodiment of a cleaner. As shown in FIG. 1, a cleaner 50 may include a controller 51, an input 52, a power supply 52a, a variable body controller 53, a dust collecting motor 54, a suction hole 55, a dust collecting apparatus 100, and a variable body 200 provided in a dust collecting apparatus.

The controller 51 may control the cleaner 50 by transferring user commands input through the input 52 to corresponding parts or by generating predetermined control commands in response to a previously defined setup and transferring the generated control commands to the corresponding parts. According to one exemplary embodiment, the controller 51 may generate control commands for controlling the variable body 200, and directly transfer the generated control commands to the variable body 200, and may also transfer the generated control commands to the variable body controller 53. The variable body controller 53 receiving the control commands may control the variable body 200 by generating control commands corresponding to the received control commands, and transferring the generated control commands to the variable body 200. The controller may include a processor. Here, the processor may be realized using one or two or more semiconductor chips.

The input 52 may receive manipulations by a user. The input 52 may be realized using various physical buttons, keyboards, touch pads, touch screens, trackballs, trackpads, joysticks, or wheels, etc. An operation of the cleaner may be started or an operation mode of the cleaner may also be changed, depending on the manipulation of the input 52. The operation mode of the cleaner may include a high-speed mode that is a mode used to rotate the dust collecting motor 54 at a high speed to generate a relatively strong suction force, and a low-speed mode used to rotate the dust collecting motor 54 at a low speed to generate a relatively weak suction force.

The power supply 52a may supply necessary power to respective parts in the cleaner, such as the controller 51, to run the cleaner.

The variable body controller 53 may control an operation of the variable body 200. The variable body controller 53 may be realized using a processor physically independent from the above-described controller 51. The variable body controller 53 may be realized using a processor installed in the dust collecting apparatus 100 in which the variable body 200 is formed.

The variable body controller 53 may generate control commands for controlling the variable body 200 based on the control commands transferred from the controller 51, and may also generate control commands for controlling the variable body 200 depending on own judgment thereof based on signals transferred from various sensors regardless of the controller 51. For example, when electric power is applied from the power supply 52a, the variable body controller 53 may sense application of the electric power, judge that driving of the cleaner 50 is started based on the sensing results, and control the variable body 200 based on the results of judgment. For example, when the driving of the cleaner 50 is started, the variable body controller 53 may control the variable body 200 by applying a predetermined voltage, for example, a voltage of 20 V to 35 V, to the variable body 200 to increase transparency of the variable body 200. As the transparency of the variable body 200 increases, a dust collecting space 101 inside the dust collecting apparatus 100 surrounded by the variable body 200 may be exposed to the outside. Here, the dust collecting space 101 refers to some or all of a space which moves on the gravity while allowing impurities to float inside the dust collecting apparatus 100, or in which the impurities may be accumulated. Therefore, a user may check an inner part of the dust collecting space 101 through the variable body 200 which has been made transparent while the cleaner 50 is running.

The dust collecting motor 54 may generate a suction force for inhaling the air and impurities on and around a surface to be cleaned while rotating at a predetermined angular speed under the control of the controller 51. The dust collecting motor 54 may include a fan motor capable of generating a suction force.

The air and impurities may be inhaled through the suction hole 55 by the suction force generated by the dust collecting motor 54.

The dust collecting apparatus 100 may separate and collect the air and impurities inhaled through the suction hole 55. Specifically, the dust collecting apparatus may separate the impurities from the air using a centrifugation method. The separated impurities may be accumulated in the dust collecting space 101 provided in the dust collecting apparatus 100.

FIG. 2 is a cross-sectional view for explaining one exemplary embodiment of a variable body. As shown in FIGS. 1 and 2, the dust collecting apparatus 100 may include a variable body 200 having at least one of transparency, shape and color changed. The variable body 200 may have the transparency, shape or color changed in response to applied electric power. The variable body 200 may form an outer wall of the dust collecting space 101 by surrounding the dust collecting space 101. That is, the dust collecting space 101 may be formed by the variable body 200. The variable body 200 may have a cylindrical shape, as shown in FIG. 2. However, the outer shape of the variable body 200 is not limited thereto. The variable body 200 may be realized in various geometrical shapes like a box having a polygonal shape, for example, a rectangular box. Also, the variable body 200 may have various shapes that may be contemplated by those skilled in the art.

Hereinafter, the variable body provided in the dust collecting apparatus will be described with reference to FIGS. 2 to 9.

According to one exemplary embodiment, the variable body 200 of the dust collecting apparatus 100 may include a cholesteric liquid crystal display panel.

Specifically, the cholesteric liquid crystal display panel may include a plurality of layers, as shown in FIG. 2. The plurality of layers may include an outer cover layer 201 provided in an outer direction, an inner cover layer 202 provided in a direction of the dust collecting space 101, and a cholesteric material layer 203 provided between the outer cover layer 201 and the inner cover layer 202.

The outer cover layer 201 and the inner cover layer 202 may be made of a material, such as glass or a synthetic resin, which may transmit light greater than or equal to a predetermined level of light. An electrode may be provided in each of the outer cover layer 201 and the inner cover layer 202. That is, a positive electrode may be provided in one of the outer cover layer 201 and the inner cover layer 202, and a negative electrode may be provided in the other layer.

The cholesteric material layer 203 may be provided between the outer cover layer 201 and the inner cover layer 202. The cholesteric material layer 203 may be realized in the form of a film.

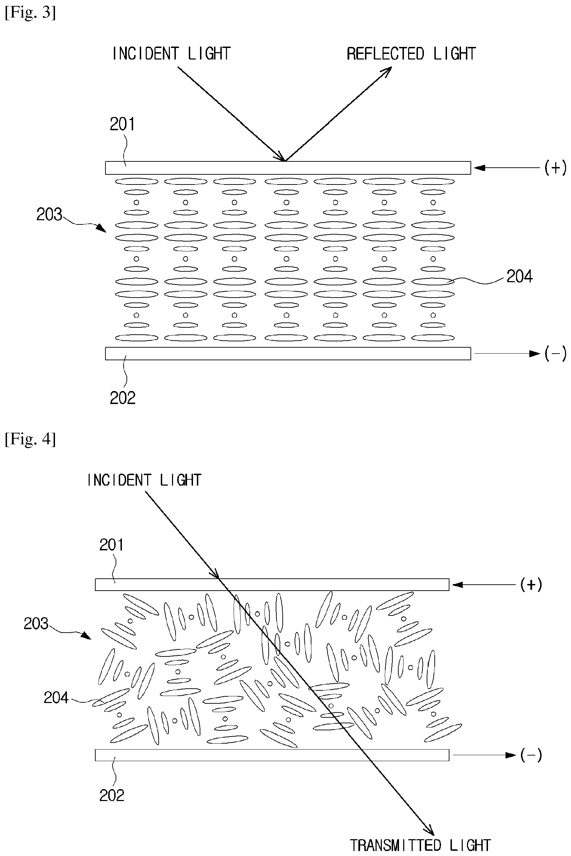

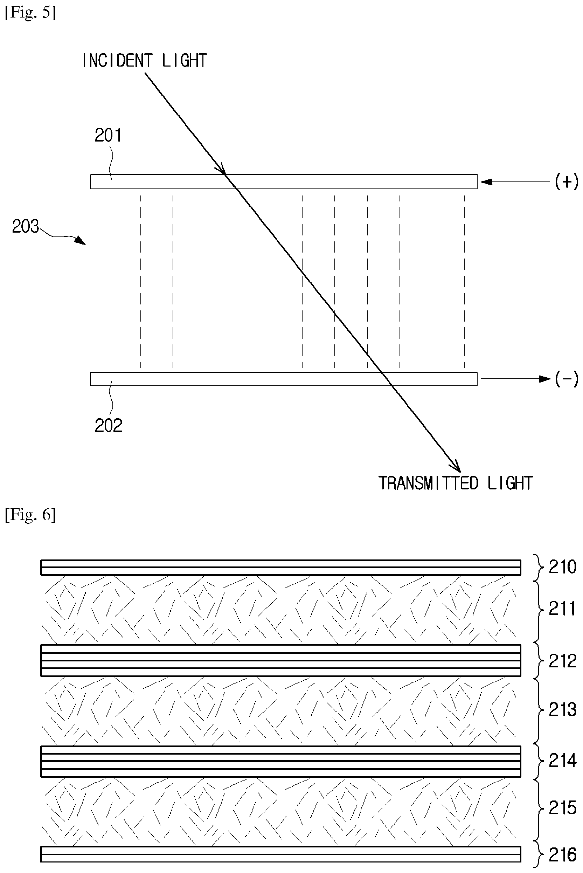

FIG. 3 is a diagram for explaining that a cholesteric liquid crystal display panel reflects incident light as one example of the variable body forming an outer wall of the dust collecting apparatus, FIG. 4 is a diagram showing the cholesteric liquid crystal display panel transmitting incident light, and FIG. 5 is a diagram showing the cholesteric liquid crystal display panel completely transmitting incident light.

As shown in FIGS. 3 to 5, a plurality of molecules 204 may be present in the cholesteric material layer 203, and the plurality of molecules 204 may have a structure in which respective layers spirally rotates. The plurality of molecules 204 in the cholesteric material layer 203 may be aligned in various configurations, depending on an applied voltage or a pattern in which electric power is applied.

As shown in FIG. 3, the plurality of molecules 204 having a spirally rotating structure may be aligned one by one so that the axis of rotation is directed in one direction. In this case, specifically, the plurality of molecules 204 may be aligned so that the axis of rotation of the plurality of molecules 204 is directed toward either the outer cover layer 201 or the inner cover layer 202. In this case, when light is incident on the cholesteric liquid crystal display panel, the light is reflected on the plurality of molecules 204 having the spirally rotating structure. As a result, the incident light may be reflected without passing through the cholesteric material layer 203. Therefore, since light reflected on or emitted from a rear side of the inner cover layer 202, that is, the dust collecting space 101 surrounded by the variable body 200 may not be emitted out through the variable body 200, a user may not see an inner part of the dust collecting space 101.

When a voltage of approximately 20 V to 30 V is applied to the plurality of molecules 204 in a state in which the plurality of molecules 204 are aligned one by one in one direction, the plurality of molecules 204 may be dispersed and the spiral axes of the plurality of respective molecules 204 may be directed to various directions, as shown in FIG. 4. When the plurality of molecules 204 are dispersed as shown in FIG. 5, light incident on the cholesteric liquid crystal display panel may travel through the cholesteric material layer 203. Therefore, transparency of the cholesteric liquid crystal display panel may be enhanced. In this case, some of the incident light may be transmitted, and the other may also be reflected. Accordingly, when the plurality of molecules 204 are dispersed as shown in FIG. 5, the cholesteric liquid crystal display panel may not be completely transparent.

Meanwhile, when a voltage of 30 V to 40 V is applied to the plurality of molecules 204 in a state in which the plurality of molecules 204 are dispersed as shown in FIG. 4, a spiral structure of the plurality of molecules 204 in the cholesteric material layer 203 may disappear and the incident light may be completely transmitted, as shown in FIG. 5. In this case, the cholesteric liquid crystal display panel may be completely transparent.

On the other hand, as shown in FIG. 5, when the voltage is sharply decreased in the case in which the spiral structure of the plurality of molecules 204 in the cholesteric material layer 203 has disappeared, the molecules 204 may be aligned one by one, as shown in FIG. 3. Accordingly, the cholesteric liquid crystal display panel reflects light without transmitting the light due to a drop in transparency. When the voltage slowly drops, the plurality of molecules 204 are dispersed, and the cholesteric liquid crystal display panel may continuously transmit some of light, as shown in FIG. 4.

When the cholesteric liquid crystal display panel forming the variable body 200 is made transparent or translucent, light reflected on or emitted from an inner side surface of the inner cover layer 202, that is, the dust collecting space 101 surrounded by the variable body 200 may be emitted to the outside through the variable body 200. As a result, a user may see the dust collecting space 101. In conclusion, the user may or may not see the dust collecting space 101 through the variable body 200 in response to the applied electric power.

FIG. 6 is a diagram showing one exemplary embodiment of the cholesteric liquid crystal display panel.

As shown in FIG. 6, the cholesteric liquid crystal display panel capable of embodying the variable body 200 may include a plurality of additional layers 210 to 216. The plurality of layers 210 to 216 may include an outer cover layer 210, a blue-reflecting cholesteric material layer 211, a first intermediate layer 212, a green-reflecting cholesteric material layer 213, a second intermediate layer 214, a red-reflecting cholesteric material layer 215, and an inner cover layer 216. A configuration in which the reflecting layers 211, 213 and 215 reflecting predetermined colors are arranged in the order of the blue-reflecting cholesteric material layer 211, the green-reflecting cholesteric material layer 213 and the red-reflecting cholesteric material layer 215 is shown in FIG. 6, but this order is not limited thereto. For example, the order of the reflecting layers may be optionally changed according to a designer's need.

The outer cover layer 210, the first intermediate layer 212, the second intermediate layer 214, and the inner cover layer 216 may be formed of a material, such as glass or a synthetic resin, which may transmit light greater than or equal to a predetermined level of light. The outer cover layer 210, the first intermediate layer 212, the second intermediate layer 214, and the inner cover layer 216 may be spaced apart from each other while protecting the cholesteric material layers 211, 213 and 215 corresponding to the outer cover layer 210, the first and second intermediate layers 212 and 214 and the inner cover layer 216.

An electrode may be provided in each of the outer cover layer 210, the first intermediate layer 212, the second intermediate layer 214, and the inner cover layer 216. An electrode corresponding to the electrode of the outer cover layer 210 and an electrode corresponding to the electrode of the second intermediate layer 214 may be provided in the first intermediate layer 212. The electrode corresponding to the electrode of the outer cover layer 210 and the electrode corresponding to the electrode of the second intermediate layer 214 may have the same polarity, and may have different polarities. According to exemplary embodiments, the same electrode may function as both the electrode corresponding to the electrode of the outer cover layer 210 and the electrode corresponding to the electrode of the second intermediate layer 214. An electrode corresponding to the electrode of the first intermediate layer 212 and an electrode corresponding to the electrode of the inner cover layer 216 may be provided in the second intermediate layer 214. The electrode corresponding to the electrode of the first intermediate layer 212 and the electrode corresponding to the electrode of the inner cover layer 216 may have the same polarity, and may have different polarities. According to exemplary embodiments, the electrode corresponding to the electrode of the first intermediate layer 212 and the electrode corresponding to the electrode of the inner cover layer 216 may be realized using the same electrode.

Electric power may be applied to the blue-reflecting cholesteric material layer 211 arranged between the outer cover layer 210 and the first intermediate layer 212, electric power may be applied to the green-reflecting cholesteric material layer 213 arranged between the first intermediate layer 212 and the second intermediate layer 214, and electric power may be applied to the red-reflecting cholesteric material layer 215 arranged between the second intermediate layer 214 and the inner cover layer 216.

The blue-reflecting cholesteric material layer 211, the green-reflecting cholesteric material layer 213, and the red-reflecting cholesteric material layer 215 may be formed of a cholesteric material. As described above with reference to FIGS. 3 to 5, the blue-reflecting cholesteric material layer 211, the green-reflecting cholesteric material layer 213, and the red-reflecting cholesteric material layer 215 may transmit or reflect light in response to the applied voltage. The blue-reflecting cholesteric material layer 211 may transmit light or reflect blue light in response to the applied voltage. The green-reflecting cholesteric material layer 213 may transmit light or reflect green light in response to the applied voltage. The red-reflecting cholesteric material layer 215 may transmit light or reflect red light in response to the applied voltage.

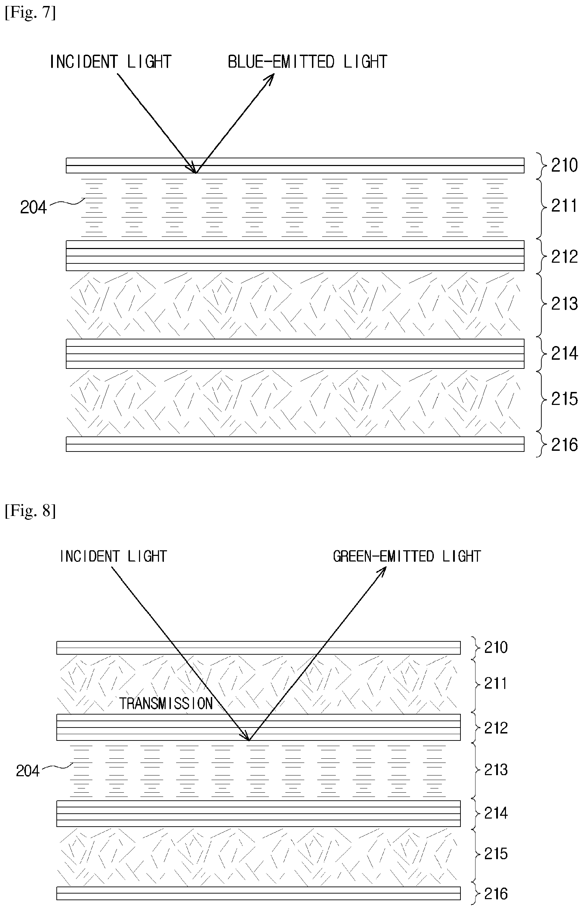

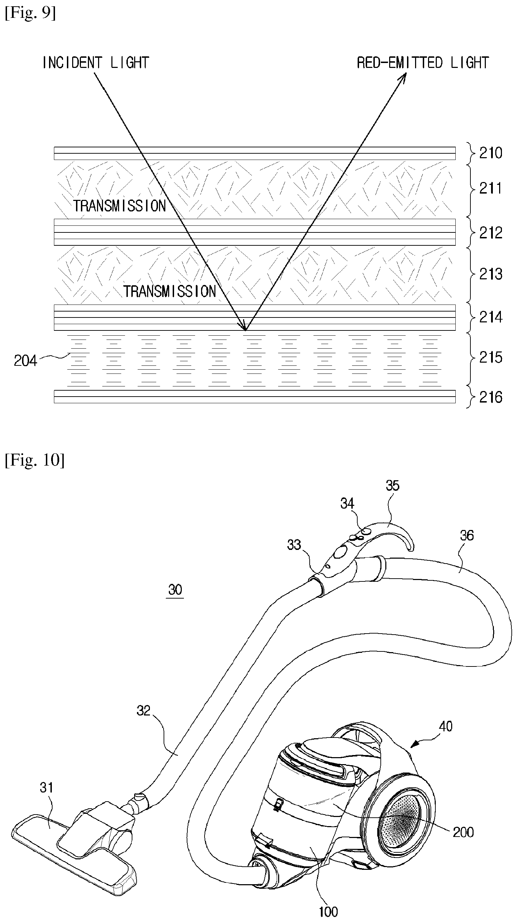

FIG. 7 is a diagram showing a cholesteric liquid crystal display panel that reflects red light, and FIG. 8 is a diagram showing a cholesteric liquid crystal display panel that reflects blue light. FIG. 9 is a diagram showing a cholesteric liquid crystal display panel that reflects green light.

As shown in FIGS. 7 to 9, no electric power may be applied to all the blue-reflecting cholesteric material layer 211, the green-reflecting cholesteric material layer 213, and the red-reflecting cholesteric material layer 215, or electric power having a predetermined voltage may be selectively applied to the blue-reflecting cholesteric material layer 211, the green-reflecting cholesteric material layer 213, and the red-reflecting cholesteric material layer 215.

For example, when no electric power is applied to all the reflecting layers 211, 213 and 215 or the electric power is applied only to the blue-reflecting cholesteric material layer 211, as shown in FIG. 7, the blue-reflecting cholesteric material layer 211 may reflect incident light to emit blue light. As shown in FIG. 8, when electric power having a predetermined voltage, for example, a voltage of 30 V or more, is applied to the blue-reflecting cholesteric material layer 211 and no electric power is applied to the green-reflecting cholesteric material layer 213, the blue-reflecting cholesteric material layer 211 may transmit incident light, and the green-reflecting cholesteric material layer 213 may reflect the incident light passing through the blue-reflecting cholesteric material layer 211 to emit green light. As shown in FIG. 9, when electric power having a predetermined voltage, for example, a voltage of 30 V or more, is applied to the blue-reflecting cholesteric material layer 211 and the green-reflecting cholesteric material layer 213 and no electric power is applied to the red-reflecting cholesteric material layer 215, the blue-reflecting cholesteric material layer 211 and the green-reflecting cholesteric material layer 213 may transmit incident light, and the red-reflecting cholesteric material layer 215 may reflect the incident light passing through the blue-reflecting cholesteric material layer 211 and the green-reflecting cholesteric material layer 213 to emit red light. On the other hand, when the electric power having a predetermined voltage, for example, a voltage of 30 V or more, is applied to all the reflecting layers 211, 213 and 215, all the reflecting layers 211, 213 and 215 may transmit incident light. As a result, the cholesteric liquid crystal display panel may be made transparent.

The blue-reflecting cholesteric material layer 211, the green-reflecting cholesteric material layer 213, and the red-reflecting cholesteric material layer 215 may become translucent, depending on the intensity of the voltage applied to the blue-reflecting cholesteric material layer 211, the green-reflecting cholesteric material layer 213, and the red-reflecting cholesteric material layer 215. Therefore, when electric power having a predetermined voltage, for example, a voltage of 20 V and 30 V, is applied to two or more of the blue-reflecting cholesteric material layer 211, the green-reflecting cholesteric material layer 213, and the red-reflecting cholesteric material layer 215, the cholesteric material layer to which the electric power is applied becomes translucent, resulting in mixed colors emitted by the cholesteric material layer to which the electric power is applied. Therefore, the cholesteric liquid crystal display panel may express a wider variety of colors in addition to the blue, green and red colors. For example, the cholesteric liquid crystal display panel may express a color such as scarlet or orange in addition to the red color.

As described above, the cholesteric liquid crystal display panel may be made transparent, or express various colors, depending on whether a predetermined voltage is applied to each of the reflecting layers 211, 213 and 215.

The three material layers 211, 213 and 215 of the cholesteric liquid crystal display panel has been described with reference to FIGS. 6 to 9, but the number of the material layers of the cholesteric liquid crystal display panel is not limited to three. The number of the material layers of the cholesteric liquid crystal display panel may be 2, and may also be 4 or more.

Also, the cholesteric material layers 203, 211, 213 and 215 of the cholesteric liquid crystal display panel may be composed of a plurality of pixels. In this case, each of the plurality of pixels may reflect incident light or transmit some or all of the incident light in response to the separately applied voltage. Therefore, the cholesteric liquid crystal display panel may display various shapes such as characters or symbols by controlling a voltage applied to each of the pixels.

According to exemplary embodiments, in the variable body 200, a touch film (not shown) may also be formed on an outer surface of the outer cover layer 210 of the cholesteric liquid crystal display panel. The touch film may allow a user to input various commands through touch manipulations by outputting a predetermined electrical signal in response to a position of touch provided on the touch film, or a touch gesture on the touch film. When the touch film is provided at the variable body 200, the user may input various commands by touching the variable body 200. For example, the user may record a replacement period, etc. by touching the variable body 200.

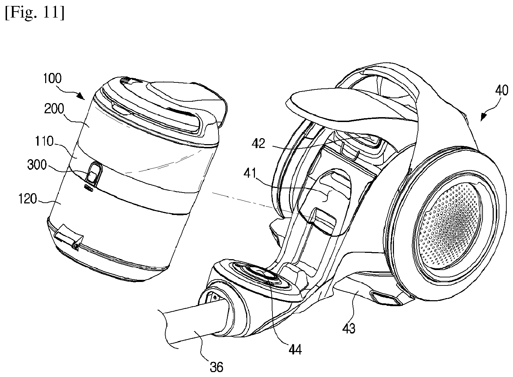

Hereinafter, a canister-type cleaner as one example of the cleaner, and a dust collecting apparatus attached to the canister-type cleaner will be described with reference to FIGS. 10 and 11.

FIG. 10 is a perspective view showing an appearance of a canister-type cleaner according to one exemplary embodiment, and FIG. 11 is a diagram showing a dust collecting apparatus which can be coupled to the canister-type cleaner according to one exemplary embodiment.

Referring to FIGS. 10 and 11, a canister-type cleaner 30 may include a suction assembly 31, a main body 40, and a dust collecting apparatus 100.

The suction assembly 31 may come in contact with a surface to be cleaned such as a floor, a wall or a window frame, etc. to inhale impurities on the surface to be cleaned using a suction force generated inside the main body 40. In this case, the suction assembly 31 may inhale impurities on the surface to be cleaned while inhaling the air around the surface to be cleaned using the suction force. A suction hole 54 (see FIG. 3) through which the air and the impurities on the surface to be cleaned are inhaled may be provided on a bottom surface of the suction assembly 31. The suction assembly 31 may have various shapes, depending on the type of the surface to be cleaned.

The suction assembly 31 may be connected to a handle assembly 33 through an extension pipe 32. The extension pipe 32 may be formed of various synthetic resins or metal materials. The extension pipe 32 may extend a distance between the handle assembly 33 and the suction assembly 31, thereby enabling a user to easily clean a surface to be cleaned such as a floor even when the user stands up. The extension pipe 32 may be provided in various lengths. According to exemplary embodiments, the extension pipe 32 may be exchangeably coupled to the suction assembly 31 and the handle assembly 33. Therefore, a user may couple the extension pipe 32 having a suitable length to the suction assembly 31 and the handle assembly 33, when necessary. The extension pipe 32 may be omitted according to exemplary embodiments.

The handle assembly 33 may connect the extension pipe 32 and an extension hose 36. A manipulator 34 and a handle 35 may be provided in the handle assembly 33. The manipulator 34 may be manipulated by a user, and may output a predetermined electrical signal through manipulation by the user. The output signal may be transferred to a processor provided inside the handle assembly 33 or the main body 40 by manipulating the manipulator 34. In this case, the processor may generate a control signal corresponding to the received signal to control various operations of the cleaner. The manipulator 34 may be provided at the handle 35 for the sake of convenience of manipulation by the user. The handle 35 may be gripped by a user, and may have various shapes which may be easily gripped by the user according to exemplary embodiments. A channel through which the inhaled air and impurities travel may be provided inside the handle assembly 33.

The extension hose 36 may connect the handle assembly 33 and the main body 40, and may transfer the air and impurities passing through the handle assembly 33 to the main body 40. The extension hose 36 may be provided to have a flexible material for the purpose of free movement of the suction assembly 31 and the handle assembly 33.

All the suction assembly 31, the extension pipe 32, the handle assembly 33, and the extension hose 36 may be provided to communicate with each other. The air inhaled at the suction assembly 31 may sequentially pass through the extension pipe 32, the handle assembly 33 and the extension hose 36 to flow into the main body 40.

The main body 40 may include a dust collecting motor 54 (see FIG. 3) configured to generate a suction force for inhaling the air and impurities inhaled at the suction assembly 31.

A first air discharger 44 configured to guide the inhaled air to the dust collecting apparatus 100, and a second air discharger 42 configured to discharge the air purified at the dust collecting apparatus 100 may be provided at the main body 40. The second air discharger 42 may communicate with a suction chamber (not shown) provided with the dust collecting motor 54. Also, a third air discharger (not shown) configured to discharge out the purified air flowing in through the suction chamber may also be provided at the main body 40.

A control system configured to control the cleaner may be provided inside the main body 40. The control system may include one or two or more semiconductor chips configured to embody a processor or a storage, and a printed circuit board on which the semiconductor chips are arranged and predetermined circuits are printed. The semiconductor chips and the printed circuit board may be built in to be fixed in the main body 40. The control system may function as the above-described controller 51.

A mounter 41 configured to mount the dust collecting apparatus 100 may be provided at the main body 40. The mounter 41 may be provided so that the dust collecting apparatus 100 may be mounted on or released from the mounter 41. Various fasteners may be provided at the mounter 41 so that the dust collecting apparatus 100 may be mounted on or released from the fasteners.

The dust collecting apparatus 100 may be connected to the main body 40 to collect impurities such as dust in the air. The dust collecting apparatus 100 may generate swirling airflow to separate the impurities from the air using a centrifugal force. The separated impurities may float in the dust collecting space 101 in the dust collecting apparatus 100, or may be accumulated in the dust collecting space 101. When a predetermined amount of the impurities are accumulated in the dust collecting apparatus 100, a user may separate the dust collecting apparatus 100 from the main body 40 to clean the impurities inside the dust collecting apparatus 100. According to exemplary embodiments, the user may easily clean the impurities in the dust collecting apparatus 100 using a fluid such as water.

The dust collecting apparatus 100 may be controlled and driven by the control system provided at the main body 40 or the dust collecting apparatus 100. The dust collecting apparatus 100 may be mounted on or released from the main body 40. The dust collecting apparatus 100 may separate the impurities from the air inhaled through the suction assembly 31, collect the impurities, and move the purified air toward the dust collecting motor 54 through the second air discharger 42.

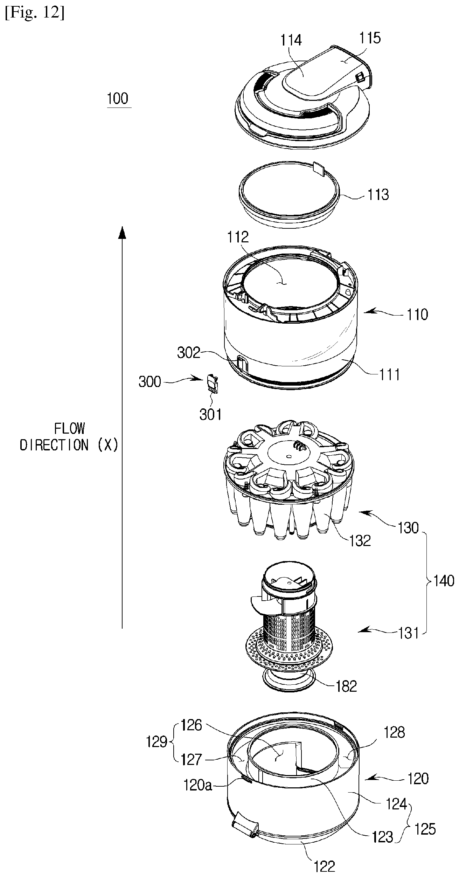

FIG. 12 is an exploded perspective view of the dust collecting apparatus according to one exemplary embodiment.

As shown in FIG. 12, the dust collecting apparatus 100 according to one exemplary embodiment may include the variable body 200, parts associated with the variable body 200, and a variable assembly including the other parts. The variable body 200 may be formed to be exposed to the outside of the variable assembly. The variable body 200 may be formed on an outer wall of the variable assembly, and may be formed through the outer wall of the variable assembly.

The variable assembly may include a first assembly 110 and a second assembly 120. The first assembly 110 and the second assembly 120 may be coupled to be separated from each other. The variable body 200 may be formed at the first assembly 110.

The first assembly 110 may be provided in a nearly cylindrical shape having open upper and lower surfaces, and apertures may be provided at upper and lower portions of the first assembly 110. A filter 113 configured to remove residual impurities in the air may be provided at the upper portion of the first assembly 110. The filter 113 may be arranged at an upper aperture 112 of the first assembly 110.

The variable body 200 may be provided at the first assembly 110. The variable body 200 may include a cholesteric liquid crystal display panel, as described above. The cholesteric liquid crystal display panel may have the transparency, shape or color changed in response to the applied voltage.

The first assembly 110 may be further provided with a housing 111 configured to support the variable body 200. A mounting location 302 configured to mount an assembly coupling apparatus 300 may be provided at the housing 111.

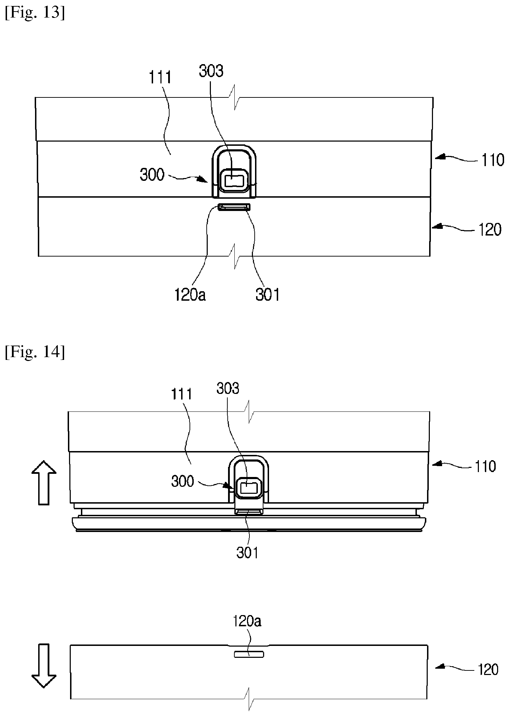

FIG. 13 is a diagram showing an assembly coupling apparatus provided at the first assembly of the dust collecting apparatus, and FIG. 14 is a diagram showing one case in which the first assembly and the second assembly are detached from each other.

The assembly coupling apparatus 300 may be fixedly installed in the mounting location 302 of the housing 111. The assembly coupling apparatus 300 may include an assembly coupling apparatus body 303 extruding through the mounting location 302, and a coupler 301 extending from the assembly coupling apparatus 300 and inserted into a coupling groove 120a of the second assembly 120 to be coupled to the second assembly 120. The mounting location 302 may be in the form of a groove, but the disclosed embodiment is not limited thereto.

The assembly coupling apparatus body 303 may have at least one semiconductor chip and a printed circuit board built therein. The at least one built-in semiconductor chip and printed circuit board may function as the above-described variable body controller 53. That is, the variable body 200 of the first assembly 110 may be controlled in response to an electrical signal output from the assembly coupling apparatus 300 provided in the first assembly 110.

The coupler 301 may protrude outward from a lower end of the housing 111, as shown in FIG. 14. The coupler 301 may be embodied as a hook or a protrusion inserted into the coupling groove 120a of the second assembly 120. Also, the coupler 301 may also be realized as an insertion groove or a magnet. The first assembly 110 and the second assembly 120 may be coupled or separated through the coupler 301. In addition, various fasteners that may be contemplated by designers may be used as the coupler 301. A user may separate the first assembly 110 and the second assembly 120 to remove impurities accumulated inside the first assembly 110 and the second assembly 120.

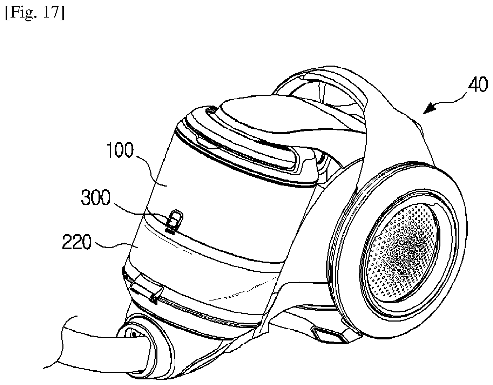

A connector configured to electrically connect the first assembly 110 and the second assembly 120 may be provided at the coupler 301. The connector may be formed of an electrically conductive material such as a metal, etc. The assembly coupling apparatus 300 installed at the first assembly 110 may control a variable body 220 (see FIG. 17) formed at the second assembly 120 by transferring an electrical signal to the second assembly 120 through the connector.

As shown in FIG. 12, a discharge port 114 and an outlet 115 may be provided at an upper end of the first assembly 110. The discharge port 114 and the outlet 115 may discharge the air, from which the impurities are separated in the dust collecting apparatus 100, toward the main body 40.

According to one exemplary embodiment, a cyclone assembly 130 configured to centrifuge the air and impurities and a grille assembly 131 configured to filter the impurities may be provided in an inner space of the first assembly 110. At least one cyclone 132 may be installed at the cyclone assembly 130. According to exemplary embodiments, the cyclone assembly 130 and the grille assembly 131 may be differently embodied in various shapes, as shown in FIG. 12. Also, the cyclone assembly 130 and the grille assembly 131 may be omitted. When the cyclone assembly 130 and the grille assembly 131 are omitted, a dust bag may also be used in the dust collecting apparatus 100.

According to exemplary embodiments, a printed circuit board having semiconductor chips, etc. installed therein may be provided inside the first assembly 110. The semiconductor chips may control an operation of the dust collecting apparatus 100 by generating control commands for controlling an operation of the dust collecting apparatus 100 and transferring the generated control commands to respective parts inside the dust collecting apparatus 100.

The second assembly 120 may accommodate the impurities separated from the air. The second assembly 120 may be provided under the first assembly 110 so that the impurities contained in the air are collected at an inner side of the second assembly 120 due to the gravity. The second assembly 120 may be arranged to communicate with the at least one cyclone 132 of the cyclone assembly 130.

A discharge cover 122 configured to open and close an impurity outlet may be provided at a lower portion of the second assembly 120, and an aperture may be provided at an upper portion of the second assembly 120. The aperture provided at the upper portion of the second assembly 120 may be connected to an aperture provided at a lower portion of the first assembly 110. As a result, the impurities collected in the first assembly 110 may descend to the second assembly 120, and may be accumulated in an inner part of the second assembly 120.

The second assembly 120 may include a body 125 and a dust collecting chamber 129 provided inside the body 125. The dust collecting chamber 129 may include a first dust collecting chamber 126, a second dust collecting chamber 127, and a third dust collecting chamber 128. Impurities discharged from different cyclone chambers may be accumulated in the first dust collecting chamber 126 and the second dust collecting chamber 127. The third dust collecting chamber 128 may collect an excessive amount of impurities accumulated in the second dust collecting chamber 127.

The second assembly 120 may include an outer wall 124 and an inner wall 123. The outer wall 124 may be provided in a cylindrical shape having open upper and lower surfaces, and the inner wall 123 may have a flange shape extending inward to have a ring-shaped space in an inner upper portion of the outer wall 124. The first dust collecting chamber 126, the second dust collecting chamber 127, and the third dust collecting chamber 128 may be formed by the outer wall 124 and the inner wall 123. At least one of the outer wall 124 and the inner wall 123 may be made of a transparent material such as glass, or a synthetic resin, etc.

According to exemplary embodiments, a printed circuit board having semiconductor chips, etc. installed therein may be provided inside the second assembly 120. The semiconductor chips may control an operation of the dust collecting apparatus 100 by generating control commands and transferring the control commands to respective parts inside the dust collecting apparatus 100.

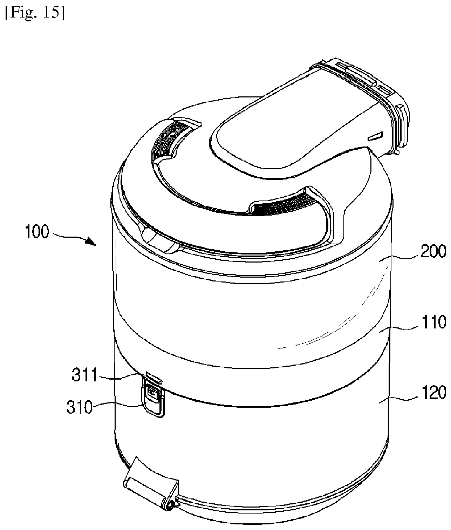

FIG. 15 is a diagram showing an assembly coupling apparatus provided in the second assembly of the dust collecting apparatus.

As shown in FIG. 15, an assembly coupling apparatus 310 may be installed at the second assembly 120. The assembly coupling apparatus 310 may have at least one semiconductor chip and a printed circuit board built therein, and the at least one built-in semiconductor chip and printed circuit board may function as the above-described variable body controller 53. That is, the variable body 200 of the first assembly 110 may also be controlled in response to an electrical signal output from the assembly coupling apparatus 310 provided at the second assembly 120.

The assembly coupling apparatus 310 may further include a coupler 311. The first assembly 110 and the second assembly 120 may be coupled or separated through the coupler 311. The coupler 311 may be embodied as a hook or a protrusion inserted into a coupling groove provided in the first assembly 110. In addition, various fasteners, such as a magnet, etc., which may be contemplated by designers may be used as the coupler 311. A connector configured to electrically connect the first assembly 110 and the second assembly 120 may be provided at the coupler 311. Therefore, the assembly coupling apparatus 300 may control the variable body 200 provided at the first assembly 110 by transferring an electrical signal to the first assembly 110 through the connector.

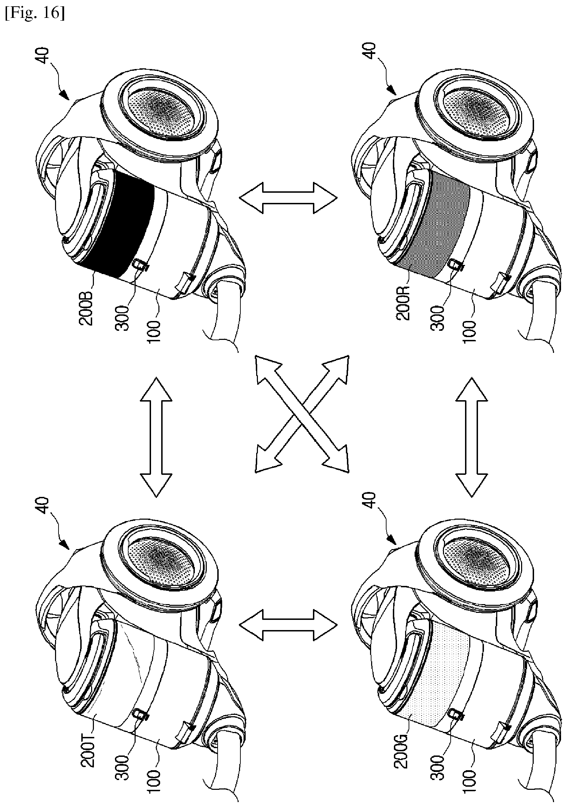

FIG. 16 is a diagram showing one case in which the transparency or color of the variable body in the first assembly is changed.

As shown in FIG. 16, the variable body 200 of the first assembly 110 may have transparency changed, a shape or color changed, the transparency and shape changed together, or the transparency and color changed together under the control of the above-described controller 51 or variable body controller 53.

For example, the variable body 200 of the first assembly 110 may be maintained in a colorless and transparent state (200T) in response to the applied voltage. Thereafter, when the applied voltage is changed depending on a situation, the variable body 200 may have a colorless and transparent state (200T) converted into a translucent or opaque state (200B, 200R or 200G). Here, the situation may include various situations such as an amount of the impurities accumulated in the dust collecting space, whether or not the impurities are inhaled into the dust collecting space, a velocity of the impurities inhaled into the dust collecting space, an amount of the impurities inhaled into the dust collecting space, a driving status of the cleaner, an operation mode of the cleaner, a charging status of the cleaning apparatus, a buffering status of the cleaning apparatus, etc.

The variable body 200 may express a predetermined color when converted into the translucent or opaque state. For example, the variable body 200 may express a translucent or opaque blue color (200B), a translucent or opaque red color (200R), or a translucent or opaque green color (200G). In addition, the variable body 200 may express various types of colors using at least one of blue (200B), red (200R) and green (200G) colors. For example, the variable body 200 may express a light pink, orange or black color, etc. In addition, the variable body 200 may express various colors.

Also, the variable body 200 may have one color changed into different colors in response to the applied voltage. The applied voltage may be determined depending on a situation. That is, the variable body 200 may have one of the translucent or opaque blue (200B), translucent or opaque red (200R) and translucent or opaque green (200G) colors changed into different colors. Further, the variable body 200 may have a state, in which the translucent or opaque blue (200B), translucent or opaque red (200R) or translucent or opaque green (200G) color is expressed, converted into the colorless and transparent state (200T) in response to the applied voltage. The applied voltage may be determined depending on a situation.

FIG. 17 is a diagram showing one exemplary embodiment in which the variable body is provided at the second assembly.

As shown in FIG. 17, the variable body 220 may be provided at the second assembly 120 of the dust collecting apparatus 100 in a different manner as described above, and no variable body may be provided at the first assembly 110. The variable body 220 provided at the second assembly 120 may use a cholesteric liquid crystal display panel. The variable body 220 may have the transparency, shape or color changed in response to the applied voltage in the same manner as in the variable body 200 provided at the first assembly 110.

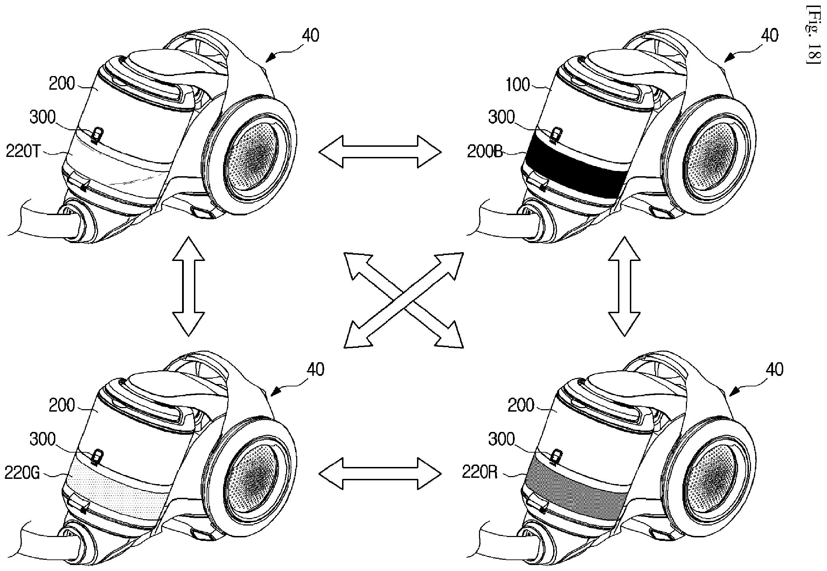

FIG. 18 is a diagram showing one case in which the transparency or color of the second assembly is changed.

As shown in FIG. 18, the variable body 220 of the second assembly 120 may have transparency changed, a shape or color changed, the transparency and shape changed together, or the transparency and color changed together under the control of the above-described controller 51 or variable body controller 53.

For example, the variable body 220 of the second assembly 120 may also have a colorless and transparent state (220T) converted into a translucent or opaque state (220B, 220R or 220G) in response to the applied voltage in the same manner as in the variable body 200 provided at the above-described first assembly 110. In this case, the variable body 220 may express a blue (220B), red (220R) or green (220G) color. In addition, the variable body 220 may express various types of colors that may be obtained using at least one of the blue (220B), red (220R) and green (220G) colors. The applied voltage may be determined depending on a situation, and the situation may include various situations such as an amount of the impurities accumulated in the dust collecting space, whether or not the impurities are inhaled into the dust collecting space, a velocity of the impurities inhaled into the dust collecting space, an amount of the impurities inhaled into the dust collecting space, a driving status of the cleaner, the last cleaning time, a charging status of the cleaning apparatus, a buffering status of the cleaning apparatus, etc.

Also, the variable body 220 may have one of the translucent or opaque blue (220B), translucent or opaque red (220R) and translucent or opaque green (220G) colors changed into different colors, or may have a state, in which the translucent or opaque blue (220B), translucent or opaque red (220R) or translucent or opaque green (220G) color is expressed, converted into the colorless and transparent state (220T).

Since the impurities separated from the air are accumulated in the dust collecting chamber 129 provided in the second assembly 120, there is an advantage in that a user may more clearly check an amount of the accumulated impurities when the variable body 220 of the second assembly 120 is made transparent.

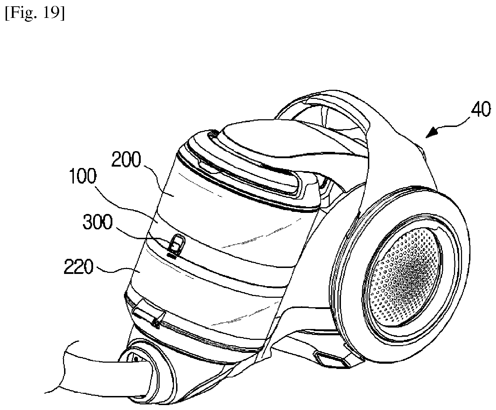

FIG. 19 is a diagram showing one exemplary embodiment in which variable body are provided at both the first and second assemblies.

As shown in FIG. 19, the variable body 200 and 220 may be provided at both the first assembly 110 and the second assembly 120. The variable body 200 and 220 provided at both the first assembly 110 and the second assembly 120 may also have transparency increased or decreased or a shape or color changed in response to the applied electric power, as described above.

The variable body 200 and 220 provided at both the first assembly 110 and the second assembly 120 may be set to operate in the same manner or operated in a different manner. For example, the variable body 200 provided at the first assembly 110 may be controlled to change a color, and the variable body 220 provided at the second assembly 120 may be controlled to change transparency.

Also, the variable body 200 of the first assembly 110 and the variable body 220 provided at the second assembly 120 may be set to operate in different situations. For example, the variable body 200 provided at the first assembly 110 may be controlled to operate in response to an impurity intake rate of the cleaner, and the variable body 220 provided at the second assembly 120 may be controlled to operate, depending on whether or not the cleaner operates.

Also, operation types and situations of the variable body 200 of the first assembly 110 and the variable body 220 provided at the second assembly 120 may be combined. For example, the variable body 200 of the first assembly 110 may be controlled to change a color in response to an impurity intake rate of the cleaner, and the variable body 220 provided at the second assembly 120 may be controlled to enhance transparency, depending on whether or not the cleaner operates.

The variable body 200 of the first assembly 110 and the variable body 220 provided at the second assembly 120 may have the transparency or the shape or color changed at the same time. Also, the variable body 200 of the first assembly 110 and the variable body 220 provided at the second assembly 120 may have the transparency or the shape or color sequentially changed at different points of time. In this case, the variable body 200 of the first assembly 110 and the variable body 220 provided at the second assembly 120 may also sequentially operate in response to the sequentially occurring situations. That is, the variable body 200 of the first assembly 110 and the second assembly 120 may operate together, depending on the occurrence of the situations. Also, the variable body 220 provided at the second assembly 120 may start to operate in advance depending on the occurrence of the situations, and, when new additional situations occur, the variable body 200 of the first assembly 110 may operate depending on the new additionally occurring situations.

Operations of the variable body 200 of the first assembly 110 and the variable body 220 provided at the second assembly 120 may be performed by the above-described controller 51, the variable body controller 53, or a combination thereof.

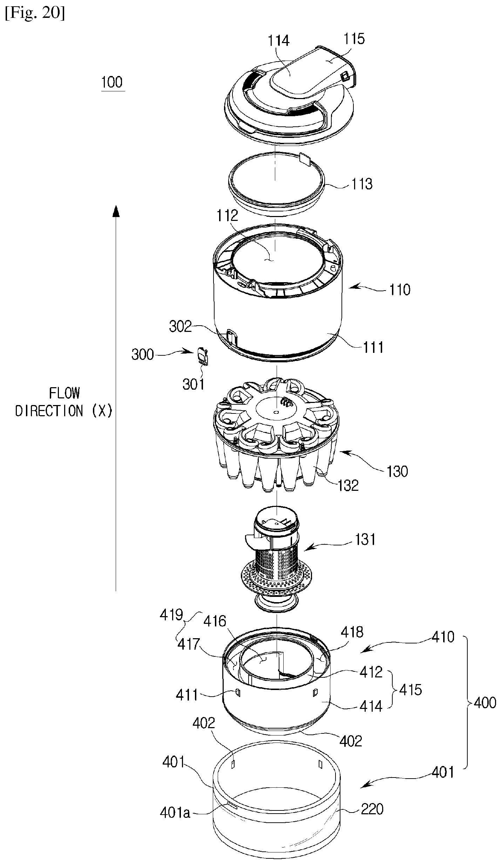

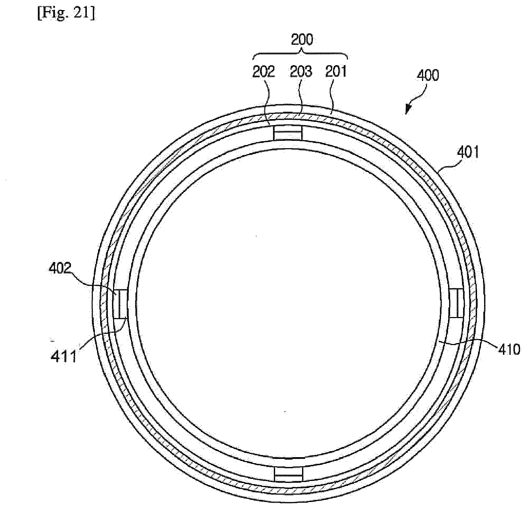

Hereinafter, other exemplary embodiments of the dust collecting apparatus and the variable body will be described with reference to FIGS. 20 and 21.

FIG. 20 is an exploded perspective view showing another exemplary embodiment of the dust collecting apparatus, and FIG. 21 is a cross-sectional view for explaining the another exemplary embodiment of the dust collecting apparatus.

As shown in FIG. 20, the dust collecting apparatus 100 according to another exemplary embodiment may include a variable assembly, and the variable assembly may include a first assembly 110 and a second assembly 400. The first assembly 110 and the second assembly 400 may be coupled to be separable from each other. A variable body 220 may be formed at the second assembly 400. The variable body 220 may include a cholesteric liquid crystal display panel. The cholesteric liquid crystal display panel may have the transparency, shape or color changed in response to the applied voltage. Although not shown in the drawings, a variable body may also be installed at the first assembly 110, as described above. Also, the variable body may be installed at both the first assembly 110 and the second assembly 400.

The first assembly 110 may be provided a nearly cylindrical shape having open upper and lower surfaces. An aperture 112 may be provided at an upper portion of the first assembly 110. A filter 113 configured to remove the residual impurities in the air may be installed at the aperture 112 of the first assembly 110. An aperture (not shown) may also be installed at a lower portion of the first assembly 110 in the same manner.

A discharge port 114 and an outlet 115 may be provided at an upper end of the first assembly 110. The discharge port 114 and the outlet 115 may discharge the air, from which the impurities are separated in the dust collecting apparatus 100, toward the main body 40.

A cyclone assembly 130 and a grille assembly 131 may be installed at the first assembly 110. At least one cyclone 132 may be installed at the cyclone assembly 130. According to exemplary embodiments, the cyclone assembly 130 and the grille assembly 131 may be differently embodied in various shapes, as shown in FIG. 20. Also, the cyclone assembly 130 and the grille assembly 131 may be omitted. In this case, a dust bag may also be used in the dust collecting apparatus 100.

According to exemplary embodiments, a printed circuit board having semiconductor chips, etc. installed therein may also be provided inside the first assembly 110. The semiconductor chips may generate control commands for controlling an operation of the dust collecting apparatus 100 and transfer the generated control commands to respective parts inside the dust collecting apparatus 100.

The second assembly 400 may accommodate the impurities separated from the air. The second assembly 400 may be provided under the first assembly 110 so that the impurities contained in the air may be collected in an internal dust collector 410 present at an inner side of the second assembly 400 due to the gravity. A discharge cover 412 configured to open and close an impurity outlet may be provided at a lower portion of the second assembly 400, and an aperture may be provided at an upper portion of the second assembly 400. The aperture provided at the upper portion of the second assembly 400 may be connected to an aperture provided at the lower portion of the first assembly 110. As a result, the impurities collected in the first assembly 110 may descend to an inner part of the second assembly 400, for example, an inner part of the internal dust collector 410.

Specifically, the second assembly 400 may include an external housing 401 in which the variable body 220 is provided, and the internal dust collector 410 having a dust collecting space formed in the inside thereof.

The external housing 401 may have a cylindrical shape having an open upper surface, as shown in FIG. 20. However, the external housing 401 may have various shapes, depending on the designers' choice. As shown in FIG. 21, the internal dust collector 410 may be coupled to an inner part of the external housing 401. The internal dust collector 410 may be coupled to be attachable/detachable to/from the external housing 401. Therefore, a user may separate the internal dust collector 410 form the external housing 401 to clean the internal dust collector 410. Accordingly, when the user cleans the second assembly 400, an electrode of a variable body 200 provided at the external housing 401 may be prevented from being damaged by water, etc.

The variable body 200 may be provided at the external housing 401, and the variable body 200 may include an outer cover layer 201, an inner cover layer 202, and a cholesteric material layer 203. The variable body 200 may be made transparent, or may have a shape or color changed in response to the electric power applied to the cholesteric material layer 203.

A first fastener 402 configured to fixedly couple the internal dust collector 410 may be provided at an inner side surface of the external housing 401. The first fastener 402 may be provided at the inner side surface of the external housing 401 to correspond to a second fastener 411 provided at an outer surface of the internal dust collector 410. The first fastener 402 may be embodied using an insertion protrusion, a hook, an insertion groove, or a magnet, etc.

The internal dust collector 410 may be arranged to communicate with at least one cyclone 132. The internal dust collector 410 may include a body 415, and a dust collecting chamber 419 provided inside the body 415. The dust collecting chamber 419 may include a first dust collecting chamber 416, a second dust collecting chamber 417, and a third dust collecting chamber 418.

The internal dust collector 410 may include an outer wall 414 and an inner wall 412. The outer wall 414 may be provided in a cylindrical shape having open upper and lower surfaces, and the inner wall 412 may have a shape corresponding to the outer wall 414. The first dust collecting chamber 416, the second dust collecting chamber 417 and the third dust collecting chamber 418 may be formed by the outer wall 414 and the inner wall 412.

The second fastener 411 corresponding to the first fastener 402 provided inside the external housing 401 may be provided at the outer wall 414 of the internal dust collector 410. Like the first fastener 402, the second fastener 411 provided at the outer wall 414 may be embodied using an insertion protrusion, a hook, an insertion groove, or a magnet, etc.

The outer wall 414 and the inner wall 412 may be manufactured using a transparent material such as glass or a synthetic resin, etc., and thus may be formed so that a user can see inner parts of the outer wall 414 and the inner wall 412. Therefore, when the variable body 200 is made transparent, the user may directly check a dust collecting space through the variable body 200 and the transparent outer and inner walls 414 and 412 with the naked eye. As a result, the user may easily check an amount of the impurities accumulated inside the dust collecting space.

According to exemplary embodiments, a printed circuit board having semiconductor chips, etc. installed therein may also be provided inside the second assembly 400. The semiconductor chips may control an operation of the dust collecting apparatus 100 by generating control commands and transferring the generated control commands to respective parts inside the dust collecting apparatus 100.

The structure, size and shape of the canister-type cleaner as described above may widely vary depending on the designers' intension and preference.

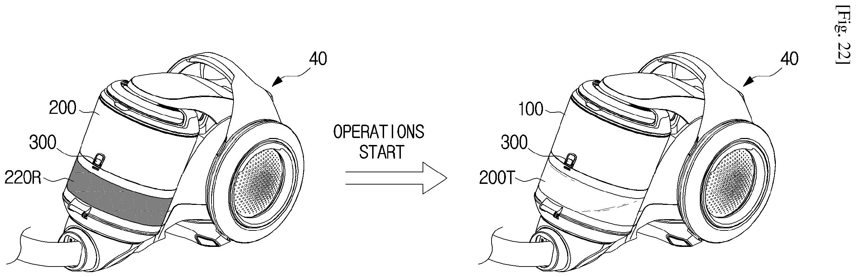

Hereinafter, various exemplary embodiments in which the variable body are controlled depending on situations will be described with reference to FIGS. 22 to 26. The variable body 200 and 220 may be controlled by the above-described controller 51, the variable body controller 53, or a combination thereof. The controller 51 or the variable body controller 53 may be embodied using semiconductor chips installed in a printed circuit board present inside the main body 40. According to one exemplary embodiment, the variable body controller 53 may also be embodied using semiconductor chips and a printed circuit board built in the above-described assembly coupling apparatuss 300 and 310.

Hereinafter, various exemplary embodiments in which the variable body is controlled using one case in which the variable body 220 is installed at the second assembly 120 or 400 will be described with reference to FIGS. 22 to 25. However, various exemplary embodiments in which the variable body 200 may be installed at the first assembly 11 and the variable body 200 installed at the first assembly 110 is described hereinafter using the same or partially modified method may also be realized.

The cleaner 50 may provide various types of information to a user using the variable body 200 and 220. The cleaner 50 may provide various types of information to the user by controlling transparency of the variable body 200 and 220, changing a color of the variable body 200 and 220, or controlling both the transparency and color of the variable body 200 and 220.

FIG. 22 is a diagram showing one case in which the transparency of the variable body of the dust collecting apparatus is changed, depending on whether or not the cleaner operates.

As shown in FIG. 22, physical properties of the variable body 220 may be changed depending on whether or not the cleaner 50 operates, that is, an on-off state of the cleaner 50. Specifically, when the dust collecting apparatus 100 is installed at the main body 40 and the cleaner 50 does not operate, that is, when the electric power of the cleaner 50 is turned off, the variable body 220 may express a predetermined color, for example, an opaque red color (220R). Here, when a user manipulates the input 52 of the cleaner 50 to operate the cleaner 50, that is, when the electric power of the cleaner 50 is in a turn-on state, the variable body 220 may become transparent (220T). Here, the variable body 220 may become colorless and transparent (220T), and may become colored and transparent.

Accordingly, the cleaner 50 may have an improved aesthetic appearance since a user cannot see the impurities accumulated inside the cleaner 50 in a normal state in which the user does not use the cleaner 50. In addition, since the user can see the impurities present inside the dust collecting space 101 when the user uses the cleaner 50, the user may check how many impurities enter the dust collecting space 101, or check how many impurities are accumulated in the dust collecting space 101.

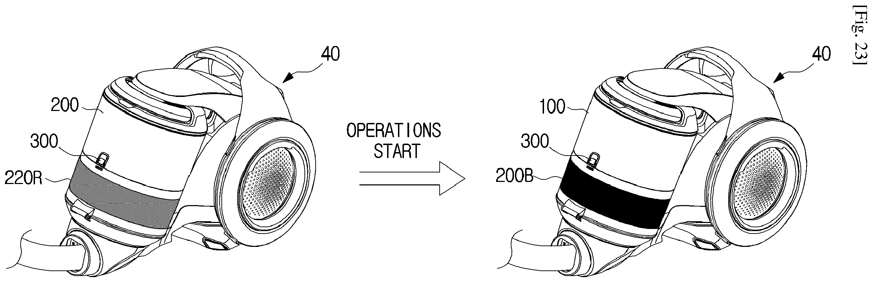

FIG. 23 is a diagram showing one case in which a color of the variable body of the dust collecting apparatus is changed depending on whether or not the cleaner operates.

Also, the physical properties of the variable body 220 may also be changed in a different manner from that of FIG. 22, depending on whether or not the cleaner 50 operates, that is, an on-off state of the cleaner 50. For example, as shown in FIG. 23, when the dust collecting apparatus 100 is installed at the main body 40 and the cleaner 50 does not operate, that is, when the electric power of the cleaner 50 is in a turn-off state, the variable body 220 may express a predetermined color, for example, an opaque red color (220R). Here, when a user manipulates the input 52 of the cleaner 50 to operate the cleaner 50, that is, when the electric power of the cleaner 50 is turned on, the variable body 220 may express an opaque blue color (220B). As a result, the user may easily check whether or not the cleaner 50 operates.

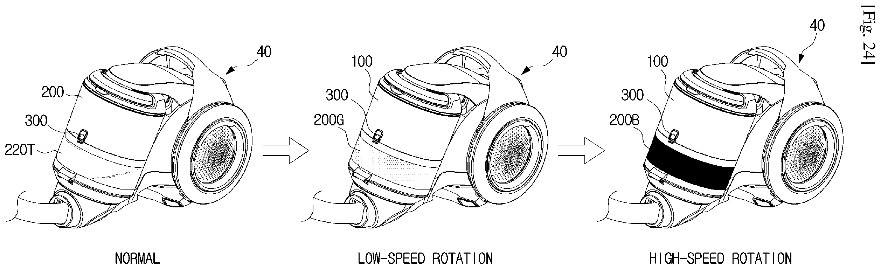

FIG. 24 is a diagram for explaining one case in which the transparency of the variable body of the dust collecting apparatus is changed depending on an operation speed of the cleaner.

The physical properties of the variable body 220 may also be changed depending on an operation speed of the cleaner 50. Here, the operation speed of the cleaner 50 may be a speed of rotation of the dust collecting motor 54. Since a suction speed of the impurities such as dust inhaled by the cleaner 50 may be determined depending on the speed of rotation of the dust collecting motor 54, the operation speed of the cleaner 50 may include a suction speed of the impurities inhaled by the cleaner 50. The operation speed of the cleaner 50 may be determined depending on an operation mode of the cleaner selected by a user. The operation mode of the cleaner 50 may include a high-speed mode in which the dust collecting motor 54 rotates at a high speed, and a low-speed mode at which the dust collecting motor 54 rotates at a low speed.

As shown in FIG. 24, when the dust collecting apparatus 100 is mounted on the main body 40 and the cleaner 50 doses not operate, that is, when the electric power of the cleaner 50 is in a turn-off state, the variable body 220 may be maintained in a transparent state (220T). When a user manipulates the input 52 of the cleaner 50 to operate the cleaner 50 and selects a low-speed mode, the variable body 220 may express an opaque green color (220G). When the user selects a high-speed mode, the variable body 220 may express an opaque red color (220R). Accordingly, the user may easily check whether or not the cleaner 50 operates, and an operation mode of the cleaner 50.

Of course, according to exemplary embodiments, when the electric power is in a turn-off state contrary to the contents as described above, the variable body 220 may express an opaque red color (220R), and when a user manipulates the input 52 of the cleaner 50 to operate the cleaner 50 and selects a low-speed mode, the variable body 220 may express an opaque green color (220G). Also, when the user selects a high-speed mode, the variable body 220 may also be in a transparent state (220T). In such a certain mode, how the variable body 220 operates may widely vary depending on the designers' choice.

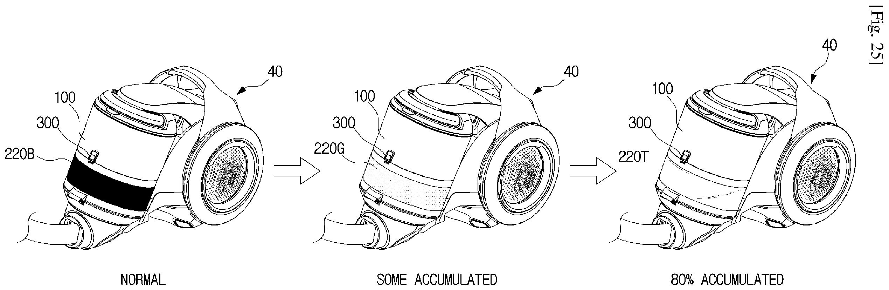

FIG. 25 is a diagram for explaining one case in which a color of the variable body of the dust collecting apparatus is changed depending on a need to clean up.

The physical properties of the variable body 220 may widely vary depending on the need to clean an inner part of the dust collecting apparatus 100 of the cleaner 50 as well.

According to one exemplary embodiment shown in FIG. 25, when no impurities or a small amount of the impurities exist in the dust collecting apparatus 100 of the main body 40, the variable body 220 may express an opaque blue color (220B). Here, an amount of the impurities present inside the dust collecting apparatus 100 may be determined using a weight sensor installed inside the dust collecting apparatus 100. When a certain amount of the impurities is present inside the dust collecting apparatus 100 of the main body 40, for example, when the impurities are accommodated to a half of the total acceptable amount of a dust collecting space in the dust collecting apparatus 100, the variable body 220 may express an opaque green color (220G). When the impurities are accumulated to an amount equal to or greater than a predetermined amount in the dust collecting apparatus 100 of the main body 40, for example, when the impurities are accommodated to 80% or more of the total acceptable amount of the dust collecting space in the dust collecting apparatus 100, the variable body 220 may express an opaque red color (220R). Therefore, a user may check how many impurities are accumulated in the dust collecting apparatus 100 without checking an inner part of the dust collecting apparatus 100, and may easily judge a time to clean the dust collecting apparatus 100.

According to another exemplary embodiment, it is judged how much time has elapsed since the final clean-up time using a timer such as a clock provided inside the dust collecting apparatus 100 or the main body 40, and the variable body 220 may turn from blue (220B) to other colors (220G and 220R) whenever the elapsed time exceeds a certain time limit, as shown in FIG. 25.

Each of the colors shown in FIG. 25 may be opaque, and may also be translucent.

The color or the transparency expressed depending on the need to clean up, or the judgment on the need to clean the cleaner 50 may vary depending on the designers' choice. The judgment on the need to clean the cleaner 50 may be performed using the above-described controller 51 or variable body controller 53.

According to exemplary embodiments, the variable body 200 and 220 may be installed at both the first assembly 110 and the second assembly 120 or 400, and each of the variable body 200 and 220 may be used to inform a user of various types of information associated with an operation of the cleaner.

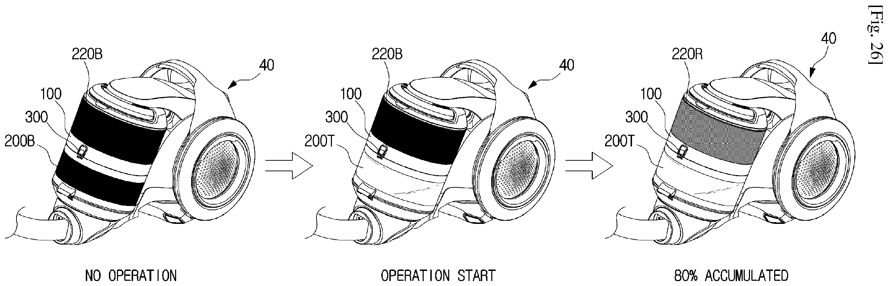

FIG. 26 is a diagram for explaining one case in which a user is informed of whether or not it is necessary to clean up during an operation of the cleaner using the variable body installed at both of the first assembly and the second assembly.

Referring to FIG. 26, the dust collecting apparatus 100 may be installed at the main body 40, and the plurality of variable body 200 and 220 may be provided at the dust collecting apparatus 100. In this case, when the electric power of the cleaner 50 is in a turn-off state, the variable body 220 of the second assembly 120 or 400 may express a predetermined color, for example, an opaque blue color (220B). Here, when a user manipulates the input 52 of the cleaner 50 to turn on the electric power of the cleaner 50, the variable body 220 of the second assembly 120 or 400 may become transparent (220T). Here, the variable body 220 may become colorless and transparent (220T), and may become colored and transparent. Meanwhile, the impurities may be continuously accumulated inside the dust collecting apparatus 100 during a cleaning process. In this case, when an amount of the impurities accumulated inside the dust collecting apparatus 100 exceeds a predetermined value, the variable body 200 of the first assembly 110 may turn from blue (200B) to red (200R). Accordingly, a user may check the impurities accumulated inside the dust collecting apparatus 100 with the naked eye while the electric power of the cleaner 50 is in a turn-on state, and simultaneously determine whether or not to clean an inner part of the dust collecting apparatus 100 through the variable body 200 of the first assembly 110. Therefore, the user's convenience may be improved.

Although the various exemplary embodiments in which the variable body 200 and 220 are controlled depending on the status of the cleaner 50 have been described above, a method of controlling the variable body 200 and 220 depending on the status of the cleaner 50 is not limited. In addition, the physical properties of the variable body 200 and 220 may be set to be changed depending on various situations or methods that may be selected and contemplated by designers.

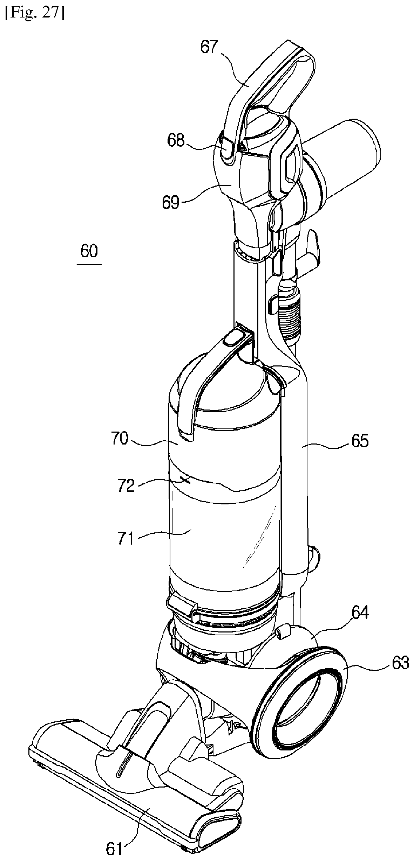

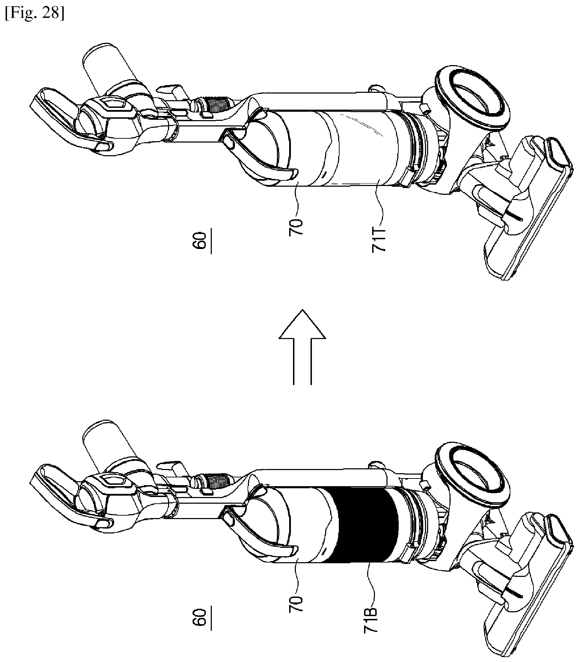

Hereinafter, an upright-type cleaner will be described as another example of the cleaner with reference to FIGS. 27 and 28.

FIG. 27 is a perspective view showing an appearance of the upright-type cleaner according to one exemplary embodiment. An upright-type cleaner 60 may be allowed to clean a surface to be cleaned (for example, a floor) in an upright-type manner.

The upright-type cleaner 60 may include a main body 64 configured to accommodate a dust collecting motor configured to generate a suction force, a suction assembly 61 connected to a front side of the main body 64, coming in contact with a surface to be cleaned and configured to inhale impurities on the surface to be cleaned together with the air using the suction force generated at the dust collecting motor, a dust collecting apparatus 70 configured to separate the impurities from the air inhaled through the suction assembly 61, a wheel assembly 63 mounted on the main body 64 to allow the cleaner 60 to move along the surface to be cleaned, an extension frame 65 extending upward from the main body 64, and a handle assembly 69 installed at an end of the extension frame 65.

Various parts configured to generate a suction force such as a dust collecting motor may be provided at the main body 64, and a processor configured control the respective parts of the cleaner 60 may also be provided at the main body 64. The processor may be realized using one or two or more semiconductor chips installed on a printed circuit board built in the main body 64. The processor may function as the controller 51 described above in FIG. 1. The dust collecting apparatus 70 may be mounted above the main body 64. The dust collecting apparatus 70 may be mounted to be coupled to and released from the main body 64.

A suction hole (not shown) may be provided at a lower surface of the suction assembly 61 to receive a suction force generated at the dust collecting motor and inhale impurities from a surface to be cleaned together with the air. According to exemplary embodiments, a brush (not shown) may be further installed at the suction hole to promote cleaning of a carpet, etc.

The dust collecting apparatus 70 may receive the air and impurities inhaled at the suction assembly 61, separate the received impurities from the air, and collect the impurities. The dust collecting apparatus 70 may separate the impurities from the air to collect the impurities using a cyclone method or a dust bag method.

The dust collecting apparatus 70 may include a variable body 71 and a housing 72 configured to fix the variable body 71. The variable body 71 may include a cholesteric liquid crystal display panel, as described above. The cholesteric liquid crystal display panel may have the transparency, shape or color changed in response to the applied voltage. The variable body 71 may be formed to surround a dust collecting space (not shown) inside the dust collecting apparatus 70. That is, the dust collecting space may be formed by the variable body 71.

The variable body 71 of the upright-type cleaner 60 may be controlled so that the physical properties of the variable body 71 are changed in various fashions, depending on various situations. The various situations may include at least one of an amount of impurities accumulated inside the dust collecting space, whether or not the cleaning apparatus operates, an impurity intake rate of the cleaning apparatus, an amount of the inhaled impurities in the cleaning apparatus, the last cleaning time, a charging status of the cleaning apparatus, and a buffering status of the cleaning apparatus. Also, the various fashions may include a change in transparency, a change in shape or color, or a combination thereof. The physical properties of variable body 71 of the upright-type cleaner 60 may be variously changed in response to a previously defined setup. Such changes may be widely determined for the respective situations, depending on the designers' choice.

The housing 72 may stably fix the variable body 71. According to exemplary embodiments, the housing 72 and the variable body 71 may be combined together to form a dust collecting space inside the dust collecting apparatus 70. A control module configured to control the variable body 71 may be installed at the housing 72. The control module may have one or two or more semiconductor chips and a printed circuit board built therein, and may function as the above-described variable body controller 53.

A handle 67 and an input 68 may be provided at the handle assembly 69. A user may grip the handle 67 to move the cleaner 60. Also, the user may use the input 68 to turn on or off the electric power of the cleaner 60, and also change various setups associated with the cleaner 60. For example, the user may manipulate the input 68 to change an operation mode of the cleaner 60.

The upright-type cleaner 60 may provide various types of information to the user using the variable body 71. For example, the cleaner 60 may provide various types of information associated with the cleaner 60 to the user by controlling transparency of the variable body 71, changing a color of the variable body 71, or controlling both the transparency and color of the variable body 71.

FIG. 28 is a diagram showing one case in which the transparency of the variable body of the dust collecting apparatus is changed depending on whether or not the upright-type cleaner operates.

As shown in FIG. 28, the physical properties of the variable body 71 may be changed depending on whether or not the cleaner 60 operates, that is, an on-off state of the cleaner 60. Specifically, when the cleaner 60 does not operate as the electric power of the cleaner 50 (cleaner 60) is turned off, the variable body 220 (variable body 71) may express a predetermined color, for example, an opaque blue color (71 B). Here, when a user turns on the electric power of the cleaner 60 to operate the cleaner 60, the variable body 71 may become transparent (71T). In this case, the variable body 71 may become colorless and transparent (71T), and may become colored and transparent.

Accordingly, a user cannot see the impurities accumulated inside the cleaner 60 in a normal state in which the user does not use the cleaner 60. In this case, when the user uses the cleaner 60, the user can directly see the impurities. As a result, the user may check how many impurities enter the dust collecting space 101, or check how many impurities are accumulated inside the dust collecting space 101. Therefore, the user may easily judge a time to clean an inner part of the dust collecting apparatus 70, or an operation of the dust collecting apparatus 70.

Although one example of a change in the physical properties of the variable body 71 has been described above, the change in the physical properties of the variable body 71 is not limited, and may be widely determined depending on the designers' choice.

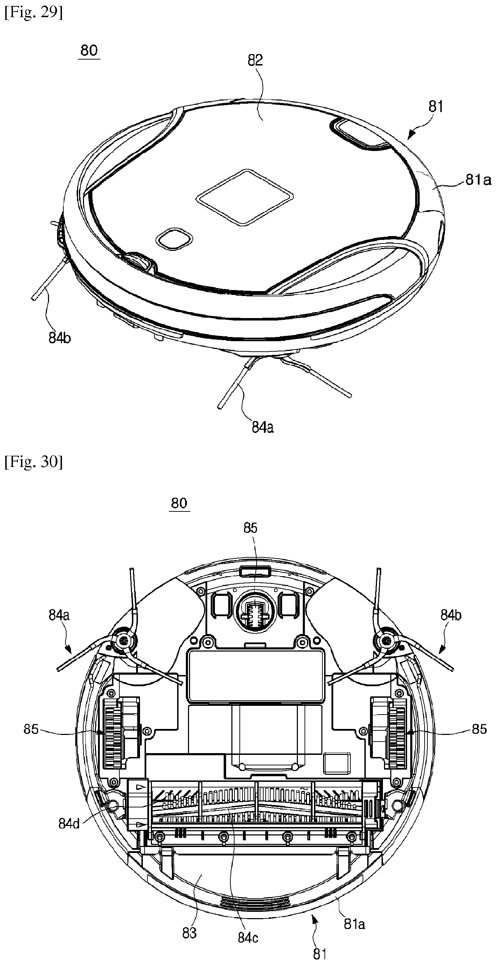

Hereinafter, a robot cleaner will be described as another example of the cleaner with reference to FIGS. 29 to 31.

FIG. 29 is a perspective view showing one exemplary embodiment of a robot cleaner, and FIG. 30 is an exploded plan view showing one exemplary embodiment of the robot cleaner.

A robot cleaner 80 refers to a type of a cleaner that automatically cleans a region to be cleaned by collecting and inhaling impurities on a surface to be cleaned such as a floor while running the region to be cleaned without any manipulations by a user. As shown in FIGS. 29 and 30, the robot cleaner 80 may include a main body 82 and a dust collecting space 83 provided at a portion of the main body 82.

Side brushes 84a and 84b, a main brush 84c, and a suction hole 84d may be provided at a bottom surface of the main body 82, and the robot cleaner 80 may use the side brushes 84a and 84b and the main brush 84c to clean a surface to be cleaned such as a floor by collecting impurities on the surface to be cleaned and inhaling the collected impurities together with the air through the suction hole 84d. The inhaled impurities may be separated from the air, and then accumulated inside the dust collecting space 83.

A driver 85, which includes one or two or more wheels configured to move the robot cleaner 80 in a predetermined direction and a motor configured to apply a driving force to the wheels, may be provided at the bottom surface of the main body 82. The robot cleaner 80 may clean a region to be cleaned by controlling the driver 85 to move along the region to be cleaned according to a preset pattern.

The dust collecting space 83 may be provided at the main body 82, and the dust collecting space 83 may be hermetically sealed by a housing 81 for a dust collecting space. The housing 81 for a dust collecting space may include a variable body 81a. A surface of the housing 81 for a dust collecting space exposed to the outside may be formed only of the variable body 81a, and may also be formed of the variable body 81a and a frame configured to fix the variable body 81a.

The variable body 81a may include a cholesteric liquid crystal display panel. The cholesteric liquid crystal display panel may have the transparency, shape or color changed in response to the applied voltage. Therefore, the variable body 81a may be made transparent or may also express various colors, depending on the applied voltage.

The variable body 81a of the robot cleaner 80 may be controlled in various fashions, depending on various situations. The various situations may include at least one of an amount of impurities accumulated inside the dust collecting space, whether or not the cleaning apparatus operates, an impurity intake rate of the cleaning apparatus, an amount of the inhaled impurities in the cleaning apparatus, the last cleaning time, a charging status of the cleaning apparatus, and a buffering status of the cleaning apparatus. The variable body 81a of the robot cleaner 80 may have transparency changed, a shape or color changed or the transparency and shape or color changed as set previously, depending on a situation.

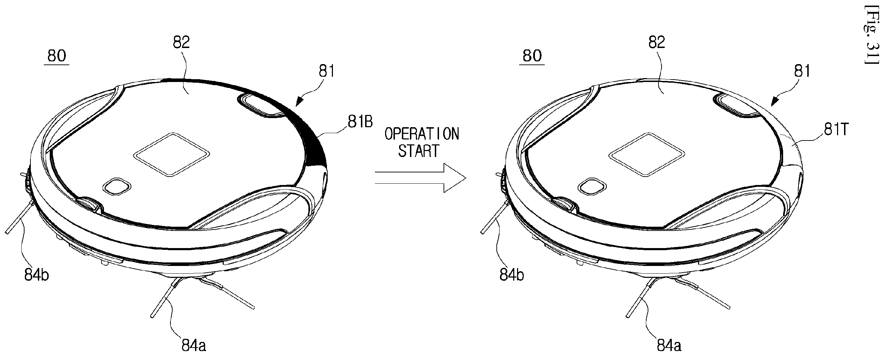

FIG. 31 is a diagram showing one case in which the transparency of the variable body of the dust collecting apparatus is changed depending on whether or not the robot cleaner operates.

As shown in FIG. 31, the physical properties of the variable body 81 may be changed depending on whether or not the robot cleaner 80 operates. Specifically, when the robot cleaner 80 does not operate as the electric power is turned off, the variable body 81 may express a predetermined color, for example, an opaque blue color (81B). Here, when a user turns on the electric power of the robot cleaner 80, the variable body 81 may become transparent (81T). In this case, the variable body 81 may become colorless and transparent (81T), and may become colored and transparent.

Accordingly, a user cannot see the impurities accumulated inside the robot cleaner 80 in a normal state in which the user does not use the robot cleaner 80. In this case, when the user uses the robot cleaner 80, the user can directly see the impurities. As a result, the user may directly check how many impurities are accumulated inside the dust collecting space 83.

Although one example of a change in the physical properties of the variable body 81 has been described above, the change in the physical properties of the variable body 81 may be widely determined depending on the designers' choice. Such a change in the physical properties of the variable body 81 may also be set in advance.

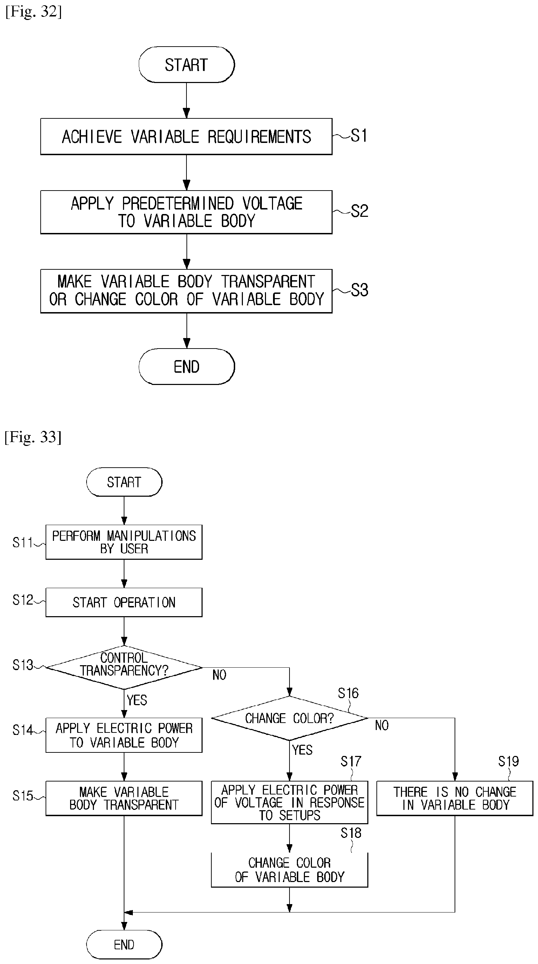

Hereinafter, methods of controlling a cleaner will be described with reference to FIGS. 32 to 34.

The methods shown in FIGS. 32 to 34 may be performed by a cleaning apparatus which includes a dust collecting space configured to collect impurities, a dust collector formed to surround the dust collecting space and having one or two or more variable body formed therein, wherein the variable body have at least one of the transparency, shape and color changed in response to the applied electric power, and a controller configured to control electric power applied to the dust collector depending on a state of the cleaning apparatus. Here, the variable body may be embodied using a cholesteric liquid crystal panel.

The dust collector may separate the air and impurities entering the dust collector using a cyclone method or a dust bag method. The separated impurities may be accumulated in the dust collecting space. The controller may be embodied using one or two or more processors. The one or two or more processors may be installed at a printed circuit board. The printed circuit board may be installed inside the cleaning apparatus. Specifically, the printed circuit board may be installed at a main body of the cleaning apparatus, and may also be installed inside the dust collector. The dust collector may include a first assembly and a second assembly, and the first assembly and the second assembly may be separated, as described above. The variable body may be installed at one of the first assembly and the second assembly, and may also be installed at both the first assembly and the second assembly.

FIG. 32 is a flowchart illustrating one exemplary embodiment of the method of controlling a cleaner.

Referring to FIG. 32, first of all, when requirements for changing the physical properties of the variable body are satisfied (s1), a predetermined voltage may be applied to the variable body, depending on the satisfied requirements (s2).

Here, the requirements for changing the physical properties of the variable body may include an amount of impurities accumulated in the dust collecting space, whether or not the cleaning apparatus operates, an impurity intake rate of the cleaning apparatus, an amount of the inhaled impurities in the cleaning apparatus, the last cleaning time, a charging status of the cleaning apparatus, a buffering status of the cleaning apparatus, etc. In addition, a variety of additional requirements may be set depending on the designers' choice.

Satisfying the variable requirements for the variable body may be performed by first determining a state of the cleaner and then judging whether the state of the cleaner corresponds to a predetermined variable requirement. The satisfaction of the variable requirements for the variable body may be performed using the above-described controller, etc.

When a voltage is applied to the variable body, the variable body may become transparent or may have a color changed in response to the applied voltage (s3). According to exemplary embodiments, the color of the variable body may be changed and the variable body may become transparent at the same time. When the variable body is a cholesteric liquid crystal panel composed of one cholesteric material layer, only the transparency of the variable body may be changed without a change in color. In this case, the variable body may become translucent when a voltage of 20 V to 30 V is applied, and the variable body may become transparent when a voltage of 30 V or more is applied. When the applied voltage suddenly drops, the variable body may become opaque. When the variable body is a cholesteric liquid crystal panel composed of a plurality of cholesteric material layers reflecting different colors of light, the variable body may be made transparent or a color of the variable body may also be changed by applying electric power to at least one of the plurality of cholesteric material layers.

FIG. 33 is a flowchart illustrating one detailed embodiment of the method of controlling a cleaner. Specifically, FIG. 33 shows one exemplary embodiment in which the physical properties of the variable body are changed depending on an on-off state of the cleaner.

Referring to FIG. 33, a user may manipulate a power button, etc. of the cleaner to convert the cleaner from a turn-off state to a turn-on state (s11). Then, the cleaner may start to operate (s12). In this case, electric power may be applied to predetermined parts in the cleaner. It may be judged whether the controller or the variable body controller starts an operation of the cleaner as the electric power is applied.

When the cleaner is set to change transparency of the variable body as an operation of the cleaner starts (s13), the controller or the variable body controller may control application of a predetermined voltage to the variable body (s14), and the variable body may be made transparent in response to the applied voltage (s15). In this case, the variable body may be made translucent by applying a voltage of 20 V to 30 V to the variable body, or may be made completely transparent by applying a voltage of 30 V or more to the variable body.

When the cleaner is set to change a color of the variable body (s16), the controller or the variable body controller may select one of the plurality of cholesteric material layers as set in advance and control the selected cholesteric material layer so that a predetermined voltage is applied to the selected cholesteric material layer (s17). A color of the variable body may be changed depending on the applied voltage and the cholesteric material layer to which the voltage is applied (s18).

When the cleaner is not set to change the transparency or color of the variable body, there is no change in the transparency or color of the variable body even when the operation of the cleaner starts (s19).

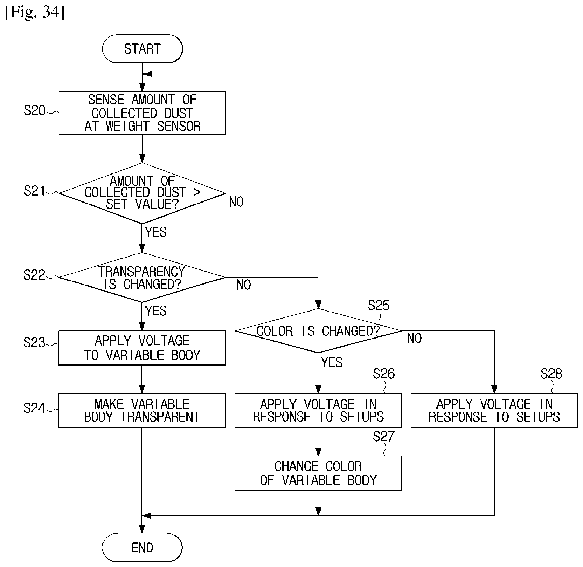

FIG. 34 is a flowchart illustrating another exemplary embodiment of the method of controlling a cleaner.

As shown in FIG. 34, first of all, a weight sensor installed inside the dust collecting apparatus may sense a weight of impurities (hereinafter referred to as a "dust collection amount") inside the dust collecting apparatus and output an electrical signal corresponding to the sensed dust collection amount (s20).

The controller or the variable body controller may judge whether the dust collection amount is greater than a predetermined set value, and generate control commands for controlling the variable body when the dust collection amount is greater than the predetermined set value (s21).

When the cleaner is set to change the transparency of the variable body in response to the dust collection amount (s22), the controller or the variable body controller may control application of a predetermined voltage to the variable body (s23), and the variable body may become transparent in response to the applied voltage (s24). In this case, the variable body may be made translucent by applying a voltage of 20 V to 30 V to the variable body, or the variable body may be made completely transparent by applying a voltage of 30 V or more to the variable body.

When the cleaner is set to change a color of the variable body in response to the dust collection amount (s25), the controller or the variable body controller may select one of the plurality of cholesteric material layers as set in advance and control the selected cholesteric material layer so that a predetermined voltage is applied to the selected cholesteric material layer (s26). A color of the variable body may be changed depending on the applied voltage and the cholesteric material layer to which the voltage is applied (s27).

When the cleaner is set not to change the transparency or color in response to the dust collection amount, no change in physical properties of the variable body may occur (s28).

Although various exemplary embodiments of the method of controlling a cleaner have been described above, various modifications may be made to the control method in which the transparency or color of the variable body provided at the cleaner is changed in response to the conditions, depending on the conditions to be set, the transparency, or the type of shape or color. This may be determined by the designers' choice, etc.

In addition, the above-described method of controlling a cleaner may be embodied using a program composed of one or more codes, and the program may be stored in various types of recording media. The various types of recording media may be inserted via various electronic apparatus, and the various electronic apparatus may also drive the program extracted from the recording media to execute the above-described method of controlling a cleaner.

### [Industrial Applicability]

As described above, the dust collecting apparatus, the cleaning apparatus using the dust collecting apparatus, and the method of controlling the cleaning apparatus can be used in home and industrial sites in in various fields, and thus can be industrially applicable.

## Claims

1. A dust collecting apparatus (100, 70) comprising:
a dust collecting space (101, 83) configured to collect impurities; and
a variable body (200, 71) formed to surround the dust collecting space, wherein at least one of transparency, displayed shape, and color of the variable body is changed by selectively transmitting or reflecting light in response to applied electric power; and
a controller (53) configured to control the electric power applied to the variable body, **characterized in that** the variable body comprises a plurality of layers (203, 211, 213, 215) capable of reflecting light with different colors in response to the applied electric power.

2. The dust collecting apparatus according to claim 1, wherein the controller (53) controls the electric power applied to the variable body (200, 71) in response to at least one of an amount of impurities accumulated in the dust collecting space (101, 83), whether or not the impurities are inhaled into the dust collecting space, and a velocity of the impurities inhaled into the dust collecting space.

3. The dust collecting apparatus according to claim 1, when the impurities are inhaled into the dust collecting apparatus (100, 70), the controller controls the electric power to be applied to all the plurality of layers so that light passes through all the plurality of layers.

4. The dust collecting apparatus according to any one of claims 1 to 3, wherein the variable body (200, 71) comprises a variable panel configured to transmit or reflect light in response to the applied electric power.

5. The dust collecting apparatus according to claim 4, wherein the variable panel comprises a plurality of layers capable of reflecting light with different colors in response to the applied electric power.

6. The dust collecting apparatus according to any one of claims 1 to 5, further comprising a variable assembly in which the variable body is installed to be exposed in inner and outer directions.

7. The dust collecting apparatus according to claim 6, wherein the variable assembly comprises a first assembly (110) having at least one open surface, and a second assembly (120, 400) having one open surface corresponding to one open surface of the first assembly and detachable/attachable from/to the first assembly.

8. The dust collecting apparatus according to claim 7, further comprising:
a connector configured to electrically connect the first assembly and the second assembly; and
a controller configured to control electric power applied to the variable body installed in at least one of the first assembly and the second assembly.

9. The dust collecting apparatus according to any one of claims 1 to 8, further comprising a sensor comprising a weight sensing sensor configured to sense an amount of impurities in the dust collecting space.

10. The dust collecting apparatus according to any one of claims 1 to 9, further comprising an internal dust collector (410) having the dust collecting space formed at an inner side thereof and having an outer surface exhibiting light transmissivity.

11. The dust collecting apparatus according to claim 10, further comprising a variable assembly in which the variable body is installed to be exposed in inner and outer directions and which is connected so that the internal dust collector is detachable/attachable from/to an inner side thereof.

12. The dust collecting apparatus according to claim 11, further comprising a fastener (402, 411) configured to fasten the internal dust collector and the variable assembly to each other.

13. A method of controlling a cleaning apparatus which comprises a dust collecting space (101; 83) configured to collect impurities, one or two or more variable body formed to surround the dust collecting space, and a controller configured to control the electric power applied to the variable body, wherein the variable body comprises a plurality of layers capable of reflecting light with different colors in response to the applied electric power, the method comprising:
determining a state of the cleaning apparatus;
applying electric power to the variable body in response to the state of the cleaning apparatus; and
changing at least one of transparency, displayed shape, and color of the variable body in response to the applied electric power.

14. The method according to claim 13, wherein the applying of the electric power to the variable body in response to the state of the cleaning apparatus comprises:
determining whether the transparency or color is set to be changed in response to the state of the cleaning apparatus; and
applying electric power to at least one of a plurality of layers capable of reflecting light with different colors, depending on whether the transparency or color is changed.

## Patentansprüche

1. Staubsammlungsvorrichtung (100; 70), umfassend:
einen Staubsammlungsraum (101; 83), der dazu ausgestaltet ist, Verunreinigungen zu sammeln; und
einen variablen Körper (200; 71), der dazu ausgebildet ist, den Staubsammlungsraum zu umgeben, wobei wenigstens eines aus Transparenz, angezeigter Form und Farbe des variablen Körpers durch selektives Übertragen oder Reflektieren von Licht in Reaktion auf angelegten elektrischen Strom geändert wird; und
eine Steuerung (53), die dazu ausgestaltet ist, den an den variablen Körper angelegten elektrischen Strom zu regeln, **dadurch gekennzeichnet, dass** der variable Körper eine Mehrzahl von Schichten (203, 211, 213, 215) umfasst, die zum Reflektieren von Licht mit unterschiedlichen Farben in Reaktion auf den angelegten elektrischen Strom imstande sind.

2. Staubsammlungsvorrichtung nach Anspruch 1, wobei die Steuerung (53) den an den variablen Körper (200; 71) angelegten elektrischen Strom in Reaktion auf wenigstens eines aus einer Menge an Verunreinigungen, die sich in dem Staubsammlungsraum (101; 83) angesammelt haben, gleich, ob die Verunreinigungen in den Staubsammlungsraum hineingesaugt werden oder nicht, und einer Geschwindigkeit der in den Staubsammlungsraum hineingesaugten Verunreinigungen regelt.

3. Staubsammlungsvorrichtung nach Anspruch 1, wobei, wenn die Verunreinigungen in die Staubsammlungsvorrichtung (100; 70) hineingesaugt werden, die Steuerung den an die gesamte Mehrzahl von Schichten anzulegenden elektrischen Strom so regelt, dass Licht durch die gesamte Mehrzahl von Schichten hindurchtritt.

4. Staubsammlungsvorrichtung nach einem der Ansprüche 1 bis 3, wobei der variable Körper (200; 71) eine variable Platte umfasst, die dazu ausgestaltet ist, Licht in Reaktion auf den angelegten elektrischen Strom zu übertragen oder zu reflektieren.

5. Staubsammlungsvorrichtung nach Anspruch 4, wobei die variable Platte eine Mehrzahl von Schichten umfasst, die zum Reflektieren von Licht mit unterschiedlichen Farben in Reaktion auf den angelegten elektrischen Strom imstande sind.

6. Staubsammlungsvorrichtung nach einem der Ansprüche 1 bis 5, die ferner eine variable Baugruppe umfasst, in die der variable Körper eingebaut ist, um in Innen- und Außenrichtungen freizuliegen.

7. Staubsammlungsvorrichtung nach Anspruch 6, wobei die variable Baugruppe eine erste Baugruppe (110) mit wenigstens einer offenen Fläche und eine zweite Baugruppe (120, 400) mit einer offenen Fläche, die einer offenen Fläche der ersten Baugruppe entspricht, und die von/an der ersten Baugruppe lösbar/anbringbar ist, umfasst.

8. Staubsammlungsvorrichtung nach Anspruch 7, ferner umfassend:
ein Verbindungselement, das dazu ausgestaltet ist, die erste Baugruppe und die zweite Baugruppe elektrisch zu verbinden; und
eine Steuerung, die dazu ausgestaltet ist, einen elektrischen Strom zu regeln, der an den variablen Körper angelegt wird, der in wenigstens einer der ersten Baugruppe und der zweiten Baugruppe eingebaut ist.

9. Staubsammlungsvorrichtung nach einem der Ansprüche 1 bis 8, die ferner einen Sensor umfasst, der einen Gewichtserfassungssensor umfasst, der dazu ausgestaltet ist, eine Menge an Verunreinigungen in dem Staubsammlungsraum zu erfassen.

10. Staubsammlungsvorrichtung nach einem der Ansprüche 1 bis 9, die ferner einen inneren Staubsammler (410) umfasst, der den Staubsammlungsraum aufweist, der an einer Innenseite desselben ausgebildet ist, und eine Außenfläche aufweist, die Lichtübertragungsfähigkeit aufweist.

11. Staubsammlungsvorrichtung nach Anspruch 10, die ferner eine variable Baugruppe umfasst, in die der variable Körper eingebaut ist, um in Innen- und Außenrichtungen freizuliegen, und die so verbunden ist, dass der innere Staubsammler von/an einer Innenseite derselben lösbar/anbringbar ist.

12. Staubsammlungsvorrichtung nach Anspruch 11, die ferner ein Befestigungselement (402, 411) umfasst, das dazu ausgestaltet ist, den inneren Staubsammler und die variable Baugruppe aneinander zu befestigen.

13. Verfahren zur Steuerung einer Reinigungsvorrichtung, die einen Staubsammlungsraum (101; 83), der dazu ausgestaltet ist, Verunreinigungen zu sammeln, einen oder zwei oder mehr variable(n) Körper, der/die dazu ausgebildet ist/sind, den Staubsammlungsraum zu umgeben, und eine Steuerung, die dazu ausgestaltet ist, den an den variablen Körper angelegten elektrischen Strom zu regeln, umfasst, wobei der variable Körper eine Mehrzahl von Schichten umfasst, die zum Reflektieren von Licht mit unterschiedlichen Farben in Reaktion auf den angelegten elektrischen Strom imstande sind, wobei das Verfahren umfasst:
Bestimmen eines Zustands der Reinigungsvorrichtung;
Anlegen von elektrischem Strom an den variablen Körper in Reaktion auf den Zustand der Reinigungsvorrichtung; und
Ändern wenigstens eines aus Transparenz, angezeigter Form und Farbe des variablen Körpers in Reaktion auf den angelegten elektrischen Strom.

14. Verfahren nach Anspruch 13, wobei das Anlegen des elektrischen Stroms an den variablen Körper in Reaktion auf den Zustand der Reinigungsvorrichtung umfasst:
Bestimmen, ob bezüglich der Transparenz oder Farbe eingestellt ist, dass sie in Reaktion auf den Zustand der Reinigungsvorrichtung geändert wird; und
Anlegen von elektrischem Strom an wenigstens eine einer Mehrzahl von Schichten, die zum Reflektieren von Licht mit unterschiedlichen Farben imstande ist, abhängig davon, ob die Transparenz oder Farbe geändert wird.

## Revendications

1. Appareil de collecte de poussière (100 ; 70), comprenant :
un espace de collecte de poussière (101 ; 83) configuré pour collecter des impuretés ; et
un corps variable (200 ; 71) formé pour entourer l'espace de collecte de poussière, au moins un élément parmi la transparence, la forme présentée et la couleur du corps variable étant modifié en transmettant ou en réfléchissant de la lumière, de façon sélective, en réponse à l'application d'énergie électrique ; et
un contrôleur (53) configuré pour contrôler l'énergie électrique appliquée au corps variable, **caractérisé en ce que** le corps variable comprend une pluralité de couches (203, 211, 213, 215) capables de réfléchir la lumière avec différentes couleurs en réponse à l'application de l'énergie électrique.

2. Appareil de collecte de poussière selon la revendication 1, le contrôleur (53) contrôlant l'énergie électrique appliquée au corps variable (200 ; 71) en réponse à au moins un élément parmi une quantité d'impuretés accumulées dans l'espace de collecte de poussière (101 ; 83), que les impuretés soient ou non aspirées dans l'espace de collecte de poussière, et une vitesse des impuretés aspirées dans l'espace de collecte de poussière.

3. Appareil de collecte de poussière selon la revendication 1, le contrôleur contrôlant l'énergie électrique devant être appliquée à la pluralité de couches de telle sorte que de la lumière passe à travers l'ensemble de la pluralité de couches, lorsque les impuretés sont aspirées dans l'espace de collecte de poussière (100 ; 70).

4. Appareil de collecte de poussière selon l'une quelconque des revendications 1 à 3, le corps variable (200 ; 71) comprenant un panneau variable configuré pour transmettre ou réfléchir de la lumière en réponse à l'application de l'énergie électrique.

5. Appareil de collecte de poussière selon la revendication 4, le panneau variable comprenant une pluralité de couches capables de réfléchir de la lumière avec différentes couleurs en réponse à l'application de l'énergie électrique.

6. Appareil de collecte de poussière selon l'une quelconque des revendications 1 à 5, comprenant en outre un assemblage variable dans lequel le corps variable est installé pour être exposé dans des directions internes et externes.

7. Appareil de collecte de poussière selon la revendication 6, l'assemblage variable comprenant un premier assemblage (110) ayant au moins une surface ouverte, et un deuxième assemblage (120, 400) ayant une surface ouverte correspondant à une surface ouverte du premier assemblage et pouvant être détaché du premier assemblage/attaché au premier assemblage.

8. Appareil de collecte de poussière selon la revendication 7, comprenant en outre :
un connecteur configuré pour connecter électriquement le premier assemblage et le deuxième assemblage ; et
un contrôleur configuré pour contrôler l'énergie électrique appliquée au corps variable installé dans au moins un assemblage parmi le premier assemblage et le deuxième assemblage.

9. Appareil de collecte de poussière selon l'une des revendications 1 à 8, comprenant en outre un capteur comprenant un capteur de poids configuré pour détecter une quantité d'impuretés dans l'espace de collecte de poussière.

10. Appareil de collecte de poussière selon l'une quelconque des revendications 1 à 9, comprenant en outre un collecteur de poussière interne (410) ayant l'espace de collecte de poussière formé sur un côté intérieur de celui-ci et ayant une surface extérieure présentant une transmission de lumière.

11. Appareil de collecte de poussière selon la revendication 10, comprenant en outre un assemblage variable dans lequel le corps variable est installé pour être exposé dans des directions internes et externes, et lequel est relié de telle sorte que le collecteur de poussière interne peut être détaché du côté intérieur de celui-ci/attaché au côté intérieur de celui-ci.

12. Appareil de collecte de poussière selon la revendication 11, comprenant en outre une attache (402, 411) configurée pour attacher le collecteur de poussière interne et l'assemblage variable entre eux.

13. Procédé de commande d'un appareil de nettoyage, lequel comprend un espace de collecte de poussière (101 ; 83) configuré pour collecter des impuretés, un ou deux corps variables ou plus, formés pour entourer l'espace de collecte de poussière, et un contrôleur configuré pour contrôler l'énergie électrique appliquée au corps variable, le corps variable comprenant une pluralité de couches capables de réfléchir de la lumière avec différentes couleurs en réponse à l'application de l'énergie électrique, le procédé comprenant :
déterminer un état de l'appareil de nettoyage ;
appliquer de l'énergie électrique au corps variable en réponse à l'état de l'appareil de nettoyage ; et
modifier au moins un élément parmi la transparence, la forme présentée et la couleur du corps variable en réponse à l'application d'énergie électrique.

14. Procédé selon la revendication 13, l'application de l'énergie électrique au corps variable en réponse à l'état de l'appareil de nettoyage comprenant :
déterminer si la transparence ou la couleur doivent être modifiées, en réponse à l'état de l'appareil de nettoyage ; et
appliquer de l'énergie électrique à au moins une couche parmi une pluralité de couches capables de réfléchir de la lumière avec différentes couleurs, en fonction de la modification de la transparence ou de la couleur.
